# EUROPEAN PATENT APPLICATION

(11) **EP 2 690 556 A2**
(43) Date of publication of application: **29.01.2014**
(21) Application number: 13172184.7
(22) Date of filing: 14.06.2013
(51) Int. Cl.: G06F 11/14, G06F 11/00

(54) **Mobile terminal and method for controlling mobile terminal**

(30) Priority: 15.06.2012 KR 20120064304; 13.08.2012 KR 20120088192
(71) Applicant: LG Electronics, Inc., Seoul, 150-721 (KR)
(72) Inventor: Lee, Wonjong, 153-801 Seoul (KR); Park, Changyoung, 153-801 Seoul (KR); Park, Mihyun, 153-801 Seoul (KR); Eum, Hyejin, 153-801 Seoul (KR); Kim, Seonghyok, 153-801 Seoul (KR); Shim, Hongjo, 153-801 Seoul (KR); Koh, Hyunho, 153-801 Seoul (KR)
(74) Representative: Cabinet Plasseraud

(57) **Abstract**

A mobile terminal including a memory; a wireless communication unit configured to perform wireless communication with an external device; at least one information acquisition mechanism configured to acquire emergent situation information for deciding whether an emergent situation has occurred; and a controller configured to transmit predetermined data files stored in the memory to the external device through the wireless communication unit according to a predetermined priority order if the emergent situation has occurred.

## Description

The present invention relates to a mobile terminal for performing a data backup or recording information on a predetermined external device if an emergent situation has occurred.

Terminals including personal computers, laptop computers, and cellular phones include multiple functions such as capturing pictures or moving images, playing music, moving image files and games and receiving broadcasting programs.

Terminals can also be categorized as mobile terminals and stationary terminals. The mobile terminals include handheld terminals and vehicle mount terminals. However, because the terminals include several functions, the terminals now must store more and more data. The functions provided by the terminal are also limited and generally relate to specific functions being executed on the terminal.

Accordingly, one object of the present invention is to address the above noted and other problems of the related art.

Another object of the present invention is to provide a mobile terminal and corresponding method for transmitting predetermined data stored in a memory to an external device according to a priority order if an emergent situation occurs.

Yet another object of the present invention is to provide a mobile terminal and a method for controlling the same to prevent the loss of important information by separately storing information stored in a mobile terminal, when the mobile terminal is flooded with water.

Still another object of the present invention is to provide a mobile terminal and corresponding method, in which the user can determine the mobile terminal has been fallen into water and become flooded.

Another aspect of the present invention is to provide a mobile terminal and corresponding method for transmitting location information, user information, and information related to an emergent situation to a predetermined report agency according to specific occurring emergent situations.

To achieve these and other advantages and in accordance with the purpose of the present invention, as embodied and broadly described herein, the present invention provides in one aspect a mobile terminal including: a memory; a wireless communication unit configured to perform wireless communication with an external device; at least one information acquisition mechanism configured to acquire emergent situation information for deciding whether an emergent situation has occurred; and a controller configured to transmit predetermined data files stored in the memory to the external device through the wireless communication unit according to a predetermined priority order if the emergent situation has occurred.

In addition, the memory may be configured to classify a plurality of backup data files into a first data group having a higher priority order and a second data group having a lower priority order and store the classified groups, and the controller may be further configured to firstly transmit data files in the first data group to the external device through a first wireless communication network among first and second wireless communication networks according to a capacity of the data files if the emergent situation has occurred and the mobile terminal is only connected to the external device via the first wireless communication network.

In such case, the controller may be configured to firstly transmit data files in the first data group to the external device through both of the first and second wireless communication networks and then secondly transmit data files in the second data group to the external device through both of the first and second wireless communication networks when the mobile terminals is connected with the external device through both of the first and the second wireless communication networks.

In addition, the controller may be configured to decide a wireless communication network among the first and second wireless communication networks to use to transmit data files included in a same data group, taking into account a capacity of the data file, a communication speed of the first wireless communication network and a communication speed of the second wireless communication network.

Moreover, the controller may be further configured to transmit one data file having a higher capacity of first and second data files included in a same data group through one network having a faster speed among the first and second wireless communication networks to the external device and to transmit the other one of the first and second data files through the other network of the first and second wireless communication networks to the external device.

In addition, the controller may be further configured to additionally form the external device and the second wireless communication network, and firstly transmit the first data group to the external device through both of the first and second wireless communication networks, and then secondly transmit the second data group to the external device through the both of the first and second wireless communication networks.

In another aspect, the present invention provides a mobile terminal including: a humidity sensing unit configured to sense humidity; a memory; and a controller configured to record flooding information in the memory indicating the mobile terminal has been flooded with water when the sensed humidity reaches a predetermined humidity.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to an embodiment of the present invention;

FIG. 2 is a flowchart illustrating a data backup method performed in a mobile terminal according to an embodiment of the present invention;

FIG. 3 is a flowchart illustrating a data backup method performed in a mobile terminal according to another embodiment of the present invention;

FIG. 4 is a diagram illustrating data files transmitted to an external device according to the data backup method shown in FIG. 3;

FIG. 5 is a diagram illustrating an emergent situation occurrence report is performed according to the data backup method shown in FIG. 3;

FIG. 6 is a flowchart illustrating a data backup method performed in a mobile terminal according to still another embodiment of the present invention;

FIG. 7 is a diagram illustrating performing a data backup and an emergent situation occurrence report according to a data backup method shown in FIG. 6;

FIG. 8 is a flowchart illustrating a data backup method performed in a mobile terminal according to yet another embodiment of the present invention;

FIG. 9 is a diagram illustrating performing a data backup and an emergent situation report according to a data backup method shown in FIG. 8;

FIG. 10 is a flowchart illustrating a data backup method performed in a mobile terminal according to another embodiment of the present invention;

FIG. 11 is a diagram illustrating performing a data backup and an emergent situation report according to a data backup method shown in FIG. 10;

FIG. 12 is a flowchart illustrating a data backup method performed in a mobile terminal according to still another embodiment of the present invention;

FIG. 13A is a flowchart illustrating a method for handling an emergent situation in a mobile terminal according to an embodiment of the present invention;

FIG. 13B is a flowchart illustrating a method for handling an emergent situation in a mobile terminal 100 according to another embodiment of the present invention;

FIG. 14 is a diagram illustrating a user interface provided in a mobile terminal for handling an emergent situation shown in FIG. 13A;

FIG. 15 is a flowchart illustrating a method for providing a data backup priority order to a specific file in a mobile terminal according to an embodiment of the present invention;

FIG. 16 is a diagram illustrating providing a priority order to an image file generated from a camera application execution results according to a method for providing a priority order shown in FIG. 15;

FIG. 17 is a diagram illustrating storing backup data in a data backup folder provided in a mobile terminal according to an embodiment of the present invention;

FIG. 18 is a diagram illustrating methods for setting a priority order of a data backup in a mobile terminal according to an embodiment of the present invention;

FIG. 19 is a flowchart illustrating a data backup method performed in a mobile terminal according to another embodiment of the present invention;

FIG. 20 is a diagram illustrating transmitting backup data files according to a data backup method shown in FIG. 19;

FIG. 21 is a flowchart illustrating a data backup method performed in a mobile terminal according to still another embodiment of the present invention;

FIG. 22 is a diagram illustrating performing data backup on an external device according to a data backup method shown in FIG. 21;

FIG. 23 is a diagram illustrating a transmission priority order between a plurality of data files included in the same backup data folder being set based on the capacity of the files in a mobile terminal according to an embodiment of the present invention;

FIG. 24 is a flowchart illustrating a data backup method performed in a mobile terminal according to yet another embodiment of the present invention;

FIG. 25 is a diagram illustrating data files transmitted to an external device for a backup according to a data backup method shown in FIG. 24;

FIG. 26 is a flowchart illustrating a method for controlling an activation state of a sensor for acquiring situation information to decide an emergent situation in a mobile terminal according to an embodiment of the present invention;

FIG. 27 is a flowchart illustrating a method for controlling an activation state of a sensor for acquiring situation information to decide an emergent situation in a mobile terminal according to another embodiment of the present invention;

FIG. 28 is a diagram illustrating a mobile terminal being flooded;

FIG. 29 is a flowchart illustrating a method for recording flooding information of a mobile terminal according to an embodiment of the present invention;

FIG. 30 is a flowchart illustrating a mobile terminal control method according to another embodiment of the present invention; and

FIG. 31 is a diagram illustrating transmitting flooding information of a mobile terminal to the outside and information related to whether to be flooded or not is provided according to an embodiment of the present invention.

Reference will now be made in detail to the preferred embodiments of the present invention, examples of which are illustrated in the accompanying drawings. In the description, the mobile terminal may include a cellular phone, a smart phone, a laptop computer, a digital broadcasting terminal, personal digital assistants (PDA), a portable multimedia player (PMP), a navigation system, etc.

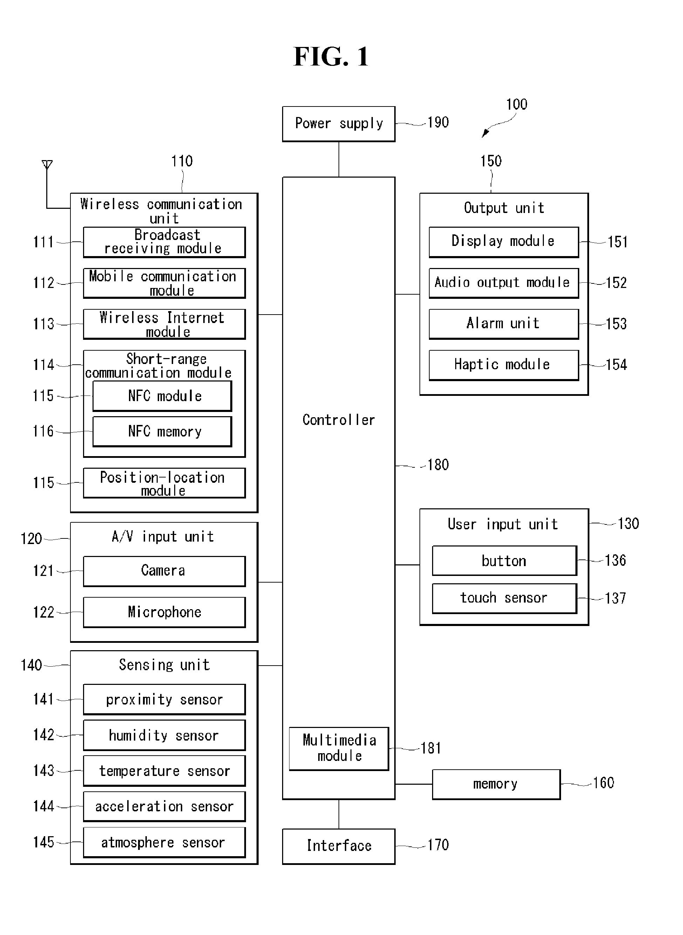

FIG. 1 is a block diagram of a mobile terminal 100 in accordance with an embodiment of the present invention. The mobile terminal 100 can include a wireless communication unit 110, an audio/video (A/V) input unit 120, a user input unit 130, a sensing unit 140, an output unit 150, memory 160, an interface 170, a controller 180, and a power supply 190. The number of components included in the mobile terminal can be varied.

The wireless communication unit 110 includes at least one module that enables radio communication between the mobile terminal 100 and a radio communication system or between the mobile terminal 100 and a network in which the mobile terminal 100 is located. For example, the wireless communication unit 110 can include a broadcast receiving module 111, a mobile communication module 112, a wireless Internet module 113, a short range communication module 114 and a position location module 115.

The broadcast receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

In addition, the broadcasting related information can be information on a broadcasting channel, a broadcasting program or a broadcasting service provider. The broadcasting related information can be provided even through a mobile communication network. In this instance, the broadcasting related information can be received by the mobile communication module 112.

Further, the broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcast receiving module 111 receives broadcasting signals using various broadcasting systems. Particularly, the broadcast receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcast receiving module 111 can also be constructed to be suited to broadcasting systems providing broadcasting signals other than the above-described digital broadcasting systems.

In addition, the broadcasting signals and/or broadcasting related information received through the broadcast receiving module 111 can be stored in the memory 160. Further, the mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 corresponds to a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The short range communication module 114 corresponds to a module for local area communication. Bluetooth, radio frequency identification (RFID), infrared data association (IrDA), ultra wideband (UWB) and ZigBee can be used as a local area communication technique.

The short range communication module 114 may include an NFC module 115 and an NFC memory 116. In particular, the NFC module 115 may be disposed in a case of the mobile terminal 100. In general, the NFC module 115 may include an antenna disposed along the perimeter of the terminal case, provide a range of communication closer to relatively low data rates (for example, 424 kb/s), and comply with standards such as ISO18092 or ISO 21481. In some embodiments, the NFC module 115 may provide a range of communication closer to relatively high data rates (for example, 560 Mbps), and comply with TransferJet (registered trademark) protocol. Herein, the term of "NFC module 115" is referred to as the aforementioned antenna as well as NFC communication device.

In addition, the position location module 115 confirms or obtains the position of the mobile terminal 100. A global positioning system (GPS) module is a representative example of the position location module 115. In addition, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time.

Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display module 151.

The image frames processed by the camera 121 can be stored in the memory 160 or transmitted to an external device through the wireless communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when an external audio signal is received.

The user input unit 130 generates input data for controlling the operation of the terminal by the user. the user input unit 130 may include a button 136 and a touch sensor 137 located on the front/rear (constant voltage/current) or the sides of the mobile terminal 100, and may further include a key pad, a dome switch, a jog wheel, a jog switch or the like, not shown.

The sensing unit 140 can sense current states of the mobile terminal 100 such as an opened or closed state of the mobile terminal 100, a location of the mobile terminal 100, contacts of the user, a direction of the mobile terminal 100, acceleration/deceleration of the mobile terminal 100 or the like to generate sensing signals for controlling the operation of the mobile terminal 100. For example, when the mobile terminal 100 has a type of slide phone, the sensing unit 140 can sense whether the slide phone is opened or closed. In addition, the sensing unit 140 can sense whether the power supply 190 supplies power, whether the interface unit 170 is connected to external devices, and the like. Meanwhile, the sensing unit 140 may include a proximity sensor 141. (The proximity sensor will be described later).

In addition, the sensing unit 140 can sense the humidity or temperature using a humidity sensor 142 for sensing humidity or a temperature sensor 143 for sensing the temperature. Meanwhile, the humidity may include the absolute humidity and the relative humidity, where the humidity sensor 142 can sense the absolute humidity. In addition, the relative humidity can be calculated using the absolute humidity and temperature. Hereinafter, although the relative humidity is described in the embodiments of the present invention, the absolute humidity can be used.

In addition, the sensing unit 140 can include an atmosphere sensor 145 for sensing an atmosphere to measure a height of the mobile terminal 100 and an acceleration sensor 144 for sensing an acceleration of the mobile terminal 100.

The output unit 150 generates visual, auditory or tactile output and can include the display module 151, an audio output module 152, an alarm module 153 and a haptic module 154.

The display module 151 displays information processed by the mobile terminal 100. For example, the display module 151 displays UI or graphic user interface (GUI) related to a telephone call when the mobile terminal is in the call mode. The display module 151 displays a captured or/and received image, UI or GUI when the mobile terminal 100 is in the video telephony mode or the photographing mode.

The display module 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display module 151 can also be of the light transmission type. According to this structure, a user can see an object located behind the body of the mobile terminal 100 through an area of the body of the mobile terminal 100, which is occupied by the display module 151.

The mobile terminal 100 can include at least two display modules 151 according to constitution of the terminal. For example, the mobile terminal 100 can include a plurality of displays that are arranged on a single face at a predetermined distance or integrated. Otherwise, the plurality of displays can be arranged on different sides.

When the display module 151 and a sensor sensing touch (referred to as a touch sensor hereinafter) form a layered structure, which is referred to as a touch screen hereinafter, the display module 151 can be used as an input device in addition to an output device. The touch sensor can be in the form of a touch film, a touch sheet and a touch pad, for example.

The touch sensor can be constructed such that it converts a variation in pressure applied to a specific portion of the display module 151 or a variation in capacitance generated at a specific portion of the display module 151 into an electric input signal. The touch sensor can be constructed such that it can sense the pressure of touch as well as the position and area of touch.

When a touch input is applied to the touch sensor, a signal corresponding to the touch input is transmitted to a touch controller. The touch controller then processes the signal and transmits data corresponding to the processed signal to the controller 180. Accordingly, the controller 180 can detect a touched portion of the display 151.

Further, the touch sensor may be implemented using proximity sensor located in an internal region of the mobile terminal, surrounded by the touch screen, or near the touch screen. The proximity sensor 141 senses an object approaching a predetermined sensing face or an object located near the proximity sensor 141 using electromagnetic force or infrared rays without having mechanical contact. The proximity sensor 141 also has a lifetime longer than that of a contact sensor and has wide application.

In addition, the proximity sensor 141 includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

Further, a capacitive touch screen is constructed such that proximity of a pointer is detected through a variation in an electric field according to the proximity of the pointer. In this instance, the touch screen (touch sensor) can be classified as a proximity sensor.

For convenience of explanation, an action of approaching the pointer to the touch screen while the pointer is not in contact with the touch screen is referred to as "proximity touch" and an action of bringing the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

Further, the proximity sensor 141 senses proximity touch and a proximity touch pattern (for example, a proximity touch distance, a proximity touch direction, a proximity touch velocity, a proximity touch time, a proximity touch position, and a proximity touch moving state). Information corresponding to the sensed proximity touch action and proximity touch pattern can be displayed on the touch screen.

In addition, the audio output module 152 can output audio data received from the wireless communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) that are performed in the mobile terminal 100. The audio output module 152 can also include a receiver, a speaker, a buzzer, etc.

In addition, the alarm module 153 outputs a signal for indicating generation of an event of the mobile terminal 100. Examples of events generated in the mobile terminal include receiving of a call signal, receiving of a message, input of a key signal, input of touch, etc. The alarm module 153 can output signals in forms different from video signals or audio signals, for example, a signal for indicating generation of an event through vibration. The video signals or the audio signals can be also output through the display module 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can also generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to a constitution of the mobile terminal.

Further, the memory 160 can store a program for the operation of the controller 180 and temporarily store input/output data (for example, phone book, messages, still images, and moving images). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

In addition, the interface 170 serves as a path to all external devices connected to the mobile terminal 100. The interface 170 receives data from the external devices or power and transmits the data or power to the internal components of the mobile terminal 100 or transmits data of the mobile terminal 100 to the external devices.

The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a card slot included in the interface 170.

Further, the controller 180 controls the overall operation of the mobile terminal 100. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

Various embodiments of the inventive concept can be implemented in a computer or similar device readable recording medium using software, hardware or a combination thereof, for example.

According to a hardware implementation, the embodiments of the inventive concept can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some instances, the embodiments can be implemented by the controller 180.

According to a software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

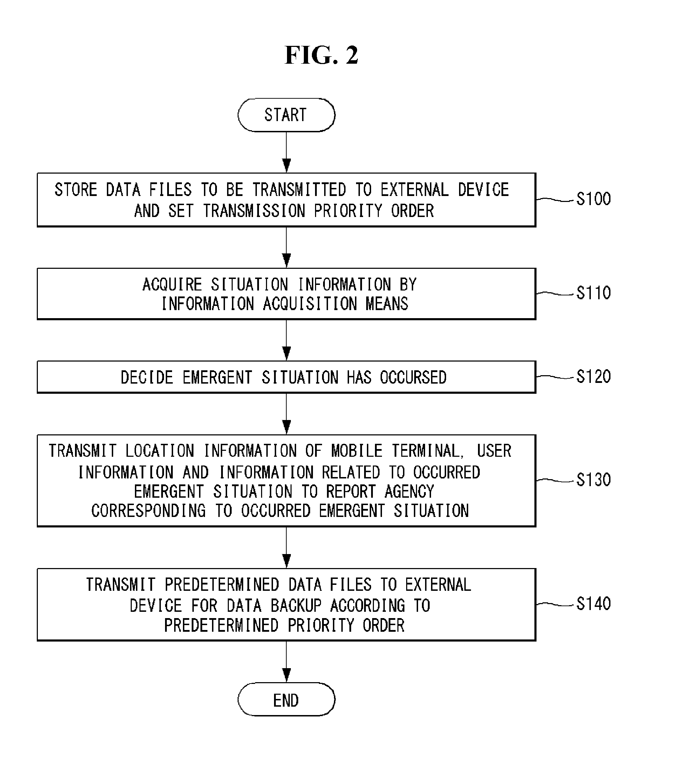

Next, FIG. 2 is a flowchart illustrating a data backup method performed in the mobile terminal 100 according to an embodiment of the present invention. As shown in FIG. 2, the controller 180 is configured to store data files to be transmitted to the external device (that is, data files for backup to the external device) and a transmission priority order between data files to the memory 160 if an emergent situation has occurred (S100).

In addition, the types of data files for backup to the external device and the transmission priority order may be already stored in the memory 160 when the mobile terminal 100 is fabricated, or may be set by the user. Further, the situation information for deciding whether an emergent situation has occurred is acquired by at least one information acquisition mechanism (S110). Here, the information acquisition mechanism may include various sensors included in the sensing unit 140 of the mobile terminal 100, the microphone 122 for acquiring the sound signal, various communication module included in the wireless communication unit 110.

If the situation information is acquired by the at least one information acquisition mechanism, the controller 180 decides whether the emergent situation has occurred based on the acquired situation information. If the controller 180 decides that the emergent situation has occurred (S120), location information and user information of the mobile terminal 100, and information related to the occurred emergent situation are firstly transmitted to the report agency corresponding to the occurred emergent situation (S130).

In addition, the information related to the occurred emergent situation may include types of the occurred emergent situation, a decision basis of the emergent situation occurrence (for example, the acquired situation information) and the like. In addition, the report agency corresponding to the occurred emergent situation may be a fire station when the emergent situation is a fire, an emergency service or a hospital when the emergent situation is a traffic accident, a lifesaving service when the emergent situation is a sea accident and the like. Other emergent situations are also possible.

The controller 180 then transmits predetermined data files of data files stored in the memory 160 to the external device for data backup according to a predetermined priority order (S140).

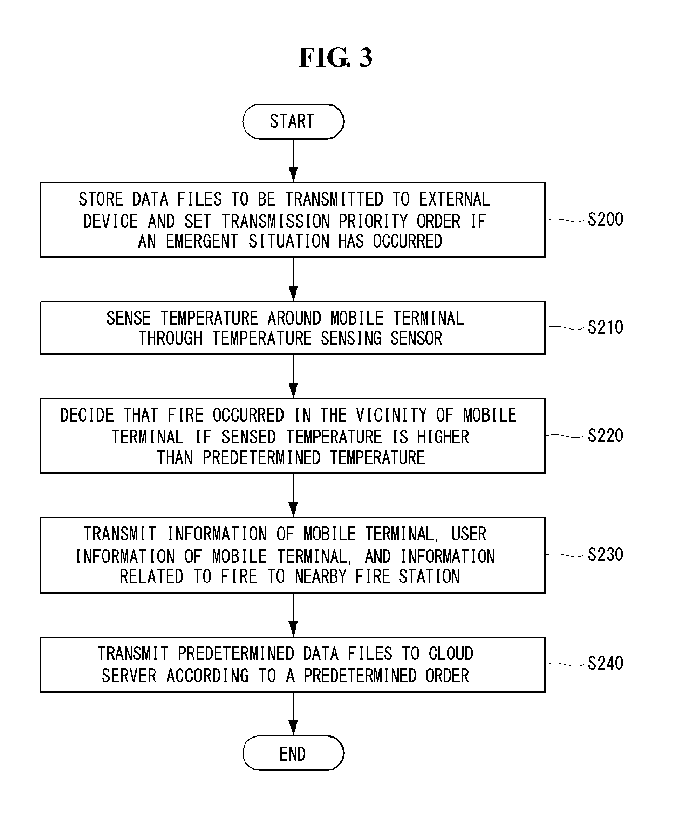

Next, FIG. 3 is a flowchart illustrating a data backup method performed in the mobile terminal 100 according to an embodiment of the present invention. As shown in FIG. 3, the controller 180 stores data files to be transmitted to the external device in the memory 160 and a transmission priority order between data files if an emergent situation has occurred (S200).

Then, the mobile terminal 100 senses a temperature around the mobile terminal 100 through the temperature sensing sensor (S210). If the sensed temperature is higher than a predetermined temperature, the controller 180 decides that a fire has occurred in the vicinity of the mobile terminal 100 (S220).

The controller 180 then transmits information of the mobile terminal 100, user information of the mobile terminal 100, and information related to the fire to the nearby fire station (S230). Meanwhile, the controller 180 can decide what fire stations to report the fire occurrence based on the location information of the current mobile terminal 100.

Next, the controller 180 transmits predetermined data files to the external device for data backup such as a cloud server according to a predetermined order (S240). In contrast with FIG. 3, the controller 180 does not perform the report function for the relevant agency, but enables the data backup function only, if the sensed temperature is higher than the predetermined temperature.

Also in contrast with FIG. 3, the controller 180 can decide that a fire has occurred the around the mobile terminal 100 if smoke is sensed around the mobile terminal 100 through a sensor included in the sensing unit 140. The controller 180 can also decide that a fire has occurred the around the mobile terminal 100 if materials of certain elements are also sensed in the ambient air of the mobile terminal 100 as a sensing result of the sensor.

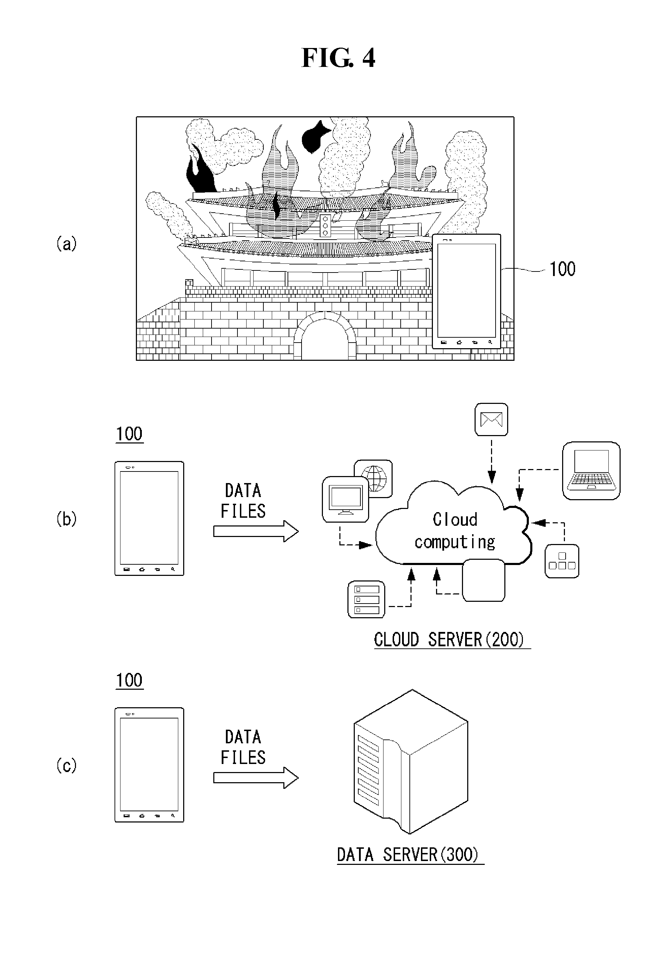

Next, FIG. 4 is a diagram illustrating data files transmitted to an external device according to the data backup method shown in FIG. 3. Referring to FIG. 4(a), the mobile terminal 100 is located in the site of the fire. At this time, the controller 180 senses that the sensed ambient temperature is higher than the predetermined temperature. Then, the controller 180 protects critical data by transmitting the predetermined data files to a cloud server 200 or data server 300, as shown in FIGS. 4(b) and 4(c).

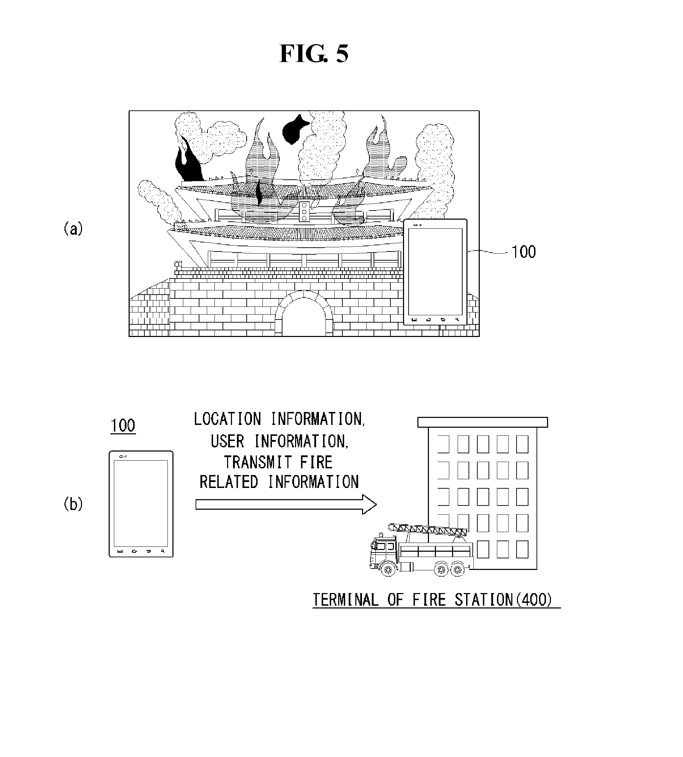

Next, FIG. 5 is a diagram illustrating performing an emergent situation occurrence report according to the data backup method shown in FIG. 3. As shown in FIG. 5(a), if the mobile terminal 100 is located in the site of the fire, the mobile terminal 100 can transmit the location information of the mobile terminal 100, user information of the mobile terminal 100, and information related to the fire to a terminal 400 of the fire station, as shown in FIG. 5(b).

In other words, the mobile terminal 100 according to an embodiment of the present invention can perform the data backup function according to the fire occurrence as well as the rescue request for the fire report. Meanwhile, the terminal 400 of the fire station may be a server of the fire station, a report system, a phone and the like.

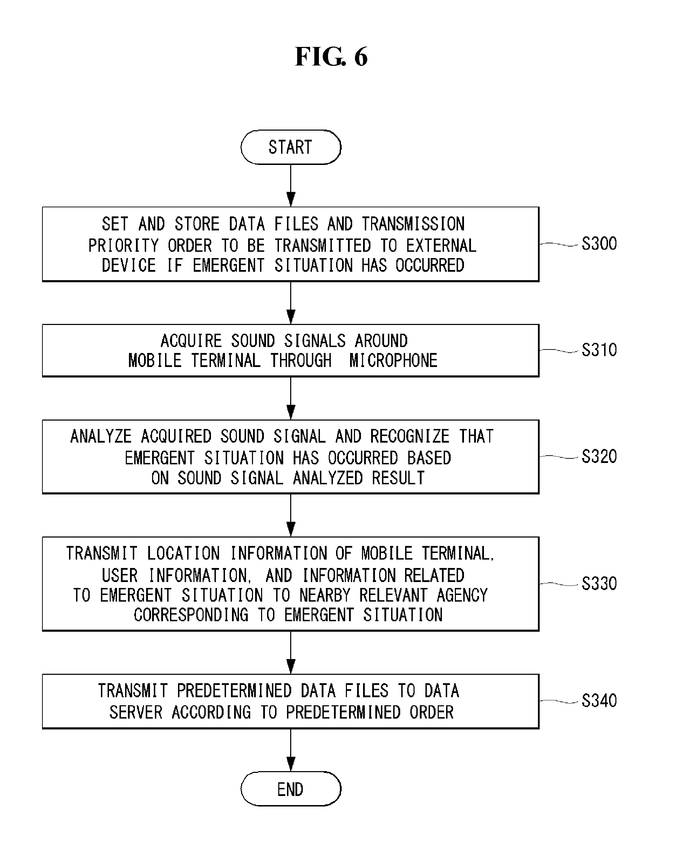

Next, FIG. 6 is a flowchart illustrating a data backup method performed in the mobile terminal 100 according to still another embodiment of the present invention. As shown in FIG. 6, the controller 180 stores data files to be transmitted to the external device (that is, data files for backup to the external device) and a transmission priority order between data files to the memory 160 if an emergent situation has occurred (S300).

Then, the mobile terminal 100 acquires sound signals around the mobile terminal 100 through the microphone 122 (S310). If the sound signal around the mobile terminal 100 is acquired, the controller 180 analyzes the acquired sound signal and recognizes that the emergent situation has occurred based on the sound signal analyzed result (S320).

For example, if the sound signal around the mobile terminal 100 is generated higher than the certain level and the sound signal is decided as the emergent alarm sound, the controller 180 decides that the emergent situation has occurred. If the controller 180 decides that the emergent situation has occurred, the controller 180 transmits information of the mobile terminal 100, user information of the mobile terminal 100, and information related to the fire to a nearby relevant agency (S330).

In addition, the controller 180 can decide a fire station to report the emergent situation based on the location information of the current mobile terminal 100. Then, the controller 180 transmits the predetermined data files to the external device for data backup such as a data server according to a predetermined order (S340).

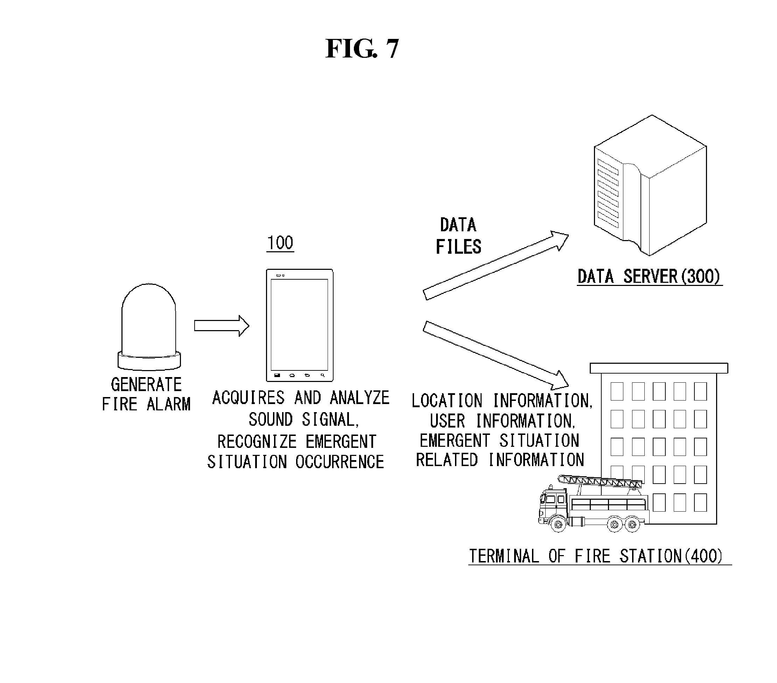

Next, FIG. 7 is a diagram illustrating performing a data backup and an emergent situation occurrence report according to a data backup method shown in FIG. 6. Referring to FIG. 7, the mobile terminal 100 analyzes the sound signal acquired through the microphone 122 and recognizes that the emergent situation has occurred.

In addition, referring to FIG. 7, the controller 180 can transmit the predetermined data files to the data server 300 and report the fire occurrence to the terminal 400 of the nearby fire station at the same time.

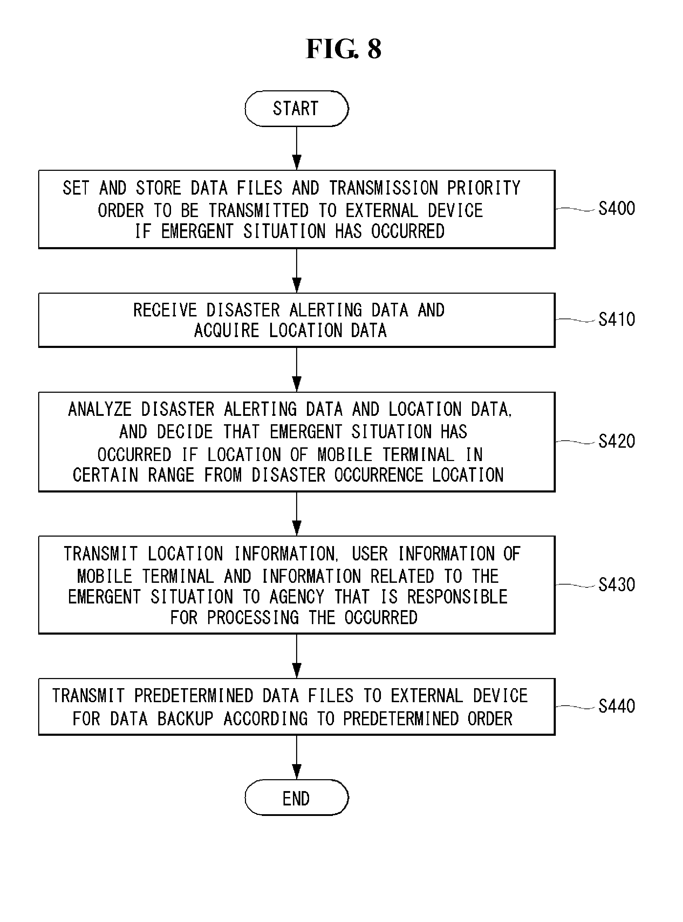

FIG. 8 is a flowchart illustrating a data backup method performed in the mobile terminal 100 according to yet another embodiment of the present invention.

As shown in FIG. 8, the controller 180 of the mobile terminal 100 stores data files to be transmitted to the external device in the memory 160 and a transmission priority order between data files if an emergent situation has occurred (S400). Then, the mobile terminal 100 receives disaster alerting data through the wireless communication unit 110, and acquires location data of the mobile terminal 100 (S410).

In addition, the disaster alerting data may be received through the broadcasting reception module 111, the mobile communication module 112, the wireless communication module 113 and the like. However, a reception path of the disaster alerting data is not limited to the above-mentioned examples.

If the disaster alerting data is received, the controller 180 decides that the emergent situation has occurred if the location of the mobile terminal 100 is in a certain range from the disaster occurrence location as an analyzed result of the disaster alerting data and the location data (S420).

If the controller 180 decides that the emergent situation has occurred, the controller 180 transmits information of the mobile terminal 100, user information of the mobile terminal 100, and information related to the fire to the agency that is responsible for processing the occurred emergent situation (S430). Then, the controller 180 transmits the predetermined data files the external device for data backup according to a predetermined order (S440).

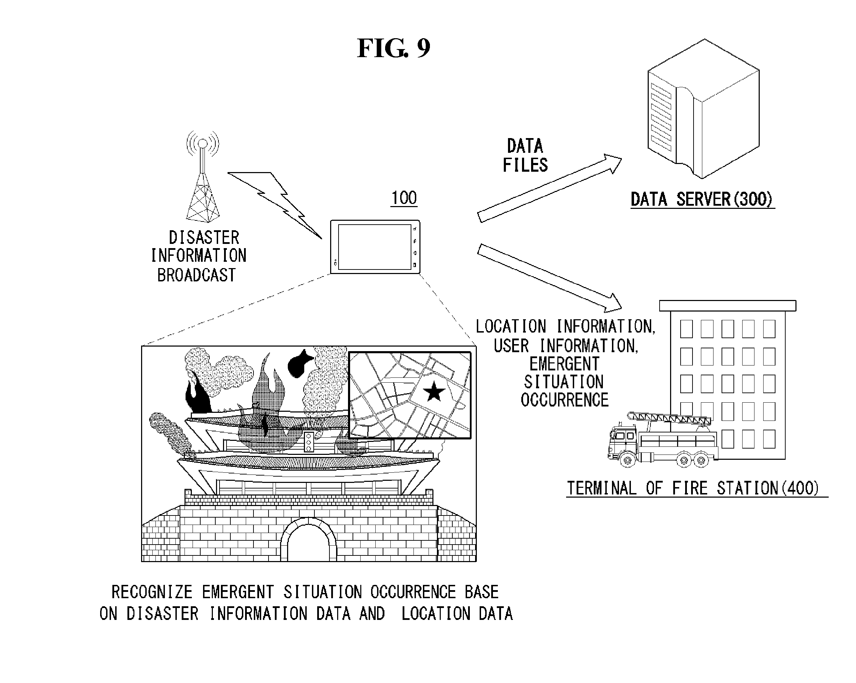

Next, FIG. 9 is a diagram illustrating performing a data backup and an emergent situation report according to the data backup method shown in FIG. 8. Further, the mobile terminal 100 receives disaster alerting communication through a broadcasting communication network. Then, the mobile terminal 100 recognizes that the emergent situation has occurred, based on the received disaster alerting data and location data, transmits predetermined data files to the data server 300 and reports the emergent situation occurrence to a nearby fire station terminal 400.

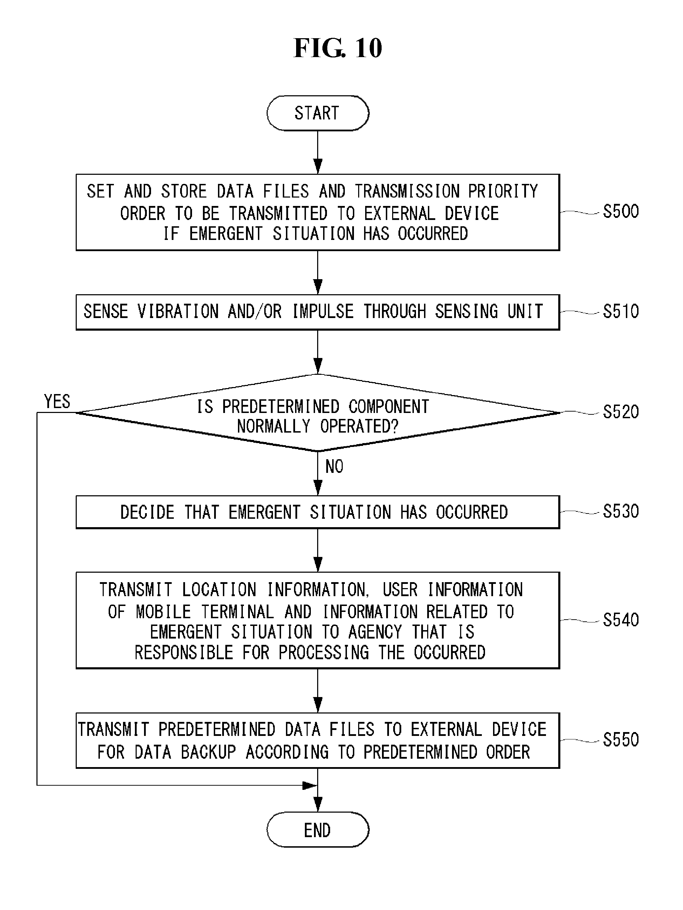

Next, FIG. 10 is a flowchart illustrating a data backup method performed in the mobile terminal 100 according to yet another embodiment of the present invention. As shown, the controller 180 stores data files to be transmitted to the external device in the memory 160 and a transmission priority order between data files if an emergent situation has occurred (S500).

Then, the mobile terminal 100 senses a vibration and/or impulse through the sensing unit 140 (S510). The controller 180 checks that a predetermined component is normally operated (S520). If the predetermined component is not normally operated, the controller 180 can decide that the emergent situation has occurred (S530), and perform the data backup operation and the emergent situation occurrence report operation (S540 and S550).

Further, in order to decide the emergent situation, the components checked for the normal operation may be components that are not damaged by a certain impulse or vibration, because the data backup and the report according to the emergent situation should be processed carefully.

Accordingly, if the emergent situation is decided, the components checked for normal operation may include an LCD panel, a GPS module, an NFC module and the like. However, although the component for normal operation may be a criteria of a decision of whether the emergent situation has occurred, the above-mentioned examples are not limited to thereto.

Meanwhile, in contrast with FIG. 10, the mobile terminal 100 can decide whether the emergent situation has occurred, without checking the normal operation of the predetermined component, by only sensing the vibration or impulse higher than a predetermined level through the sensing unit 140.

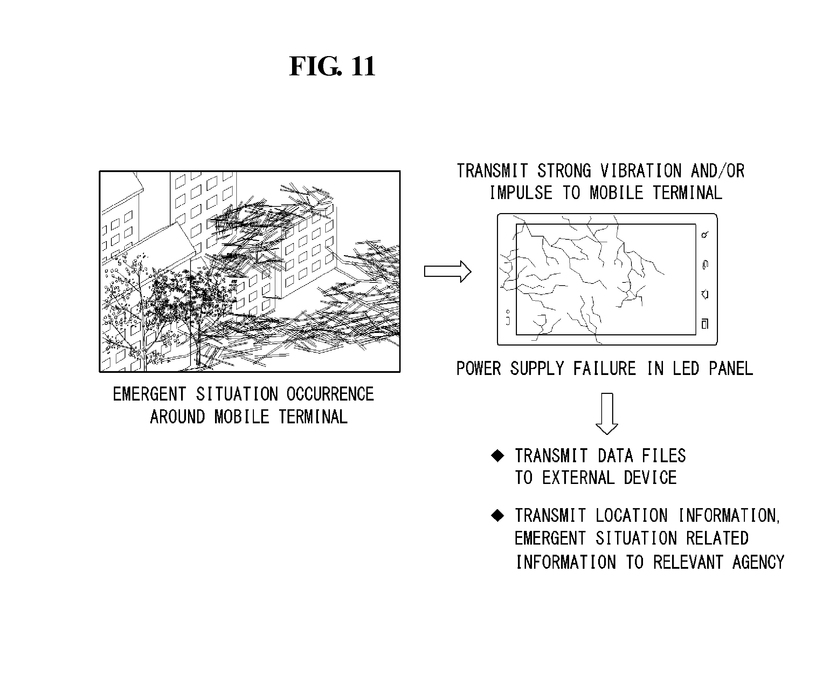

Next, FIG. 11 is a diagram illustrating performing a data backup and an emergent situation report according to the data backup method shown in FIG. 10. Referring to FIG. 11, if an emergent situation where a building collapses in the vicinity of the mobile terminal 100 has occurred, and then a strong vibration and/or impulse is transmitted to the mobile terminal 100, the mobile terminal 100 recognizes a disorder of the power supply of the LCD panel and recognizes that the emergent situation has occurred. Then, the mobile terminal 100 performs the data backup and the report operation of the emergent situation occurrence as shown in FIG. 11.

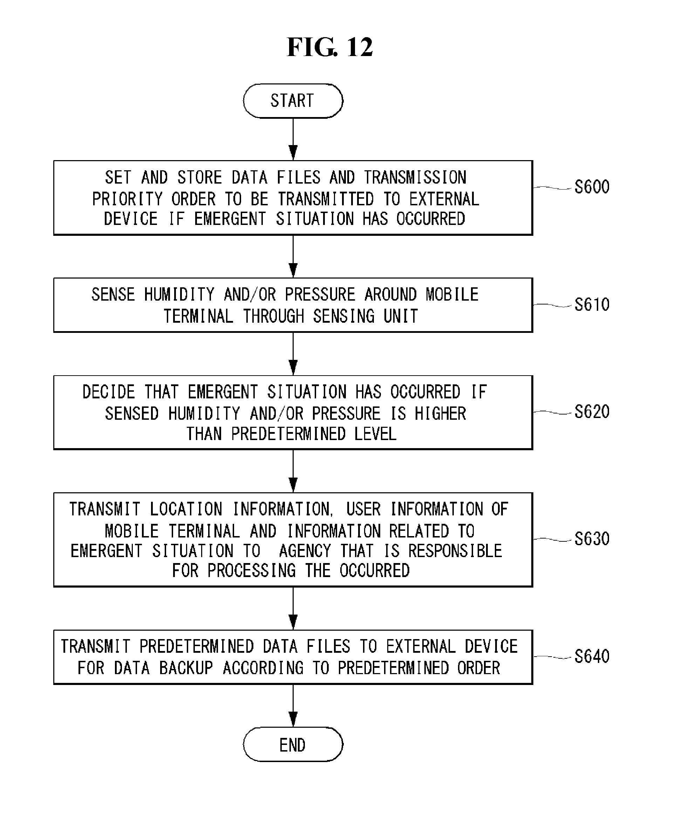

Next, FIG. 12 is a flowchart illustrating a data backup method performed in the mobile terminal 100 according to still another embodiment of the present invention. As shown, the controller 180 stores data files to be transmitted to the external device and a transmission priority order between data files to the memory 160 if an emergent situation has occurred (S600).

Then, the mobile terminal 100 senses the humidity and/or pressure around the mobile terminal 100 through the sensing unit 140 (S610). If the sensed humidity and/or pressure is higher than a predetermined level, the controller 180 decides that the emergent situation has occurred (S620), and the data backup operation and the emergent situation occurrence report operation are performed (S630 and S640).

That is, because the humidity in water could be sensed higher than a predetermined level (for example 100%), and the pressure is sensed much higher than the predetermined level, the sensed values may be a criteria for sensing whether the mobile terminal 100 has fallen into the water.

Meanwhile, the controller 180 can decide whether the mobile terminal 100 has fallen into the water by referring to the location information of the mobile terminal 100 together with the sensed humidity or pressure of the mobile terminal 100. For example, if the location of the mobile terminal 100 is a lake, a river or the sea and the sensed humidity is higher than a predetermined level, the mobile terminal 100 can decide that the mobile terminal 100 has fallen into the water.

In addition, the controller 180 can decide that the mobile terminal 100 has fallen into the water based on the speed of the fall of the mobile terminal 100 acquired through the sensing unit 140, because the fall speed of an object into the water is lower than the fall speed in the air.

[x]In addition, the controller 180 can recognize that the mobile terminal 100 has fallen into the water based on the separate operation of the sensing circuit operating in response to the water, and accordingly the data backup operation or the emergent situation occurrence report can be performed as well.

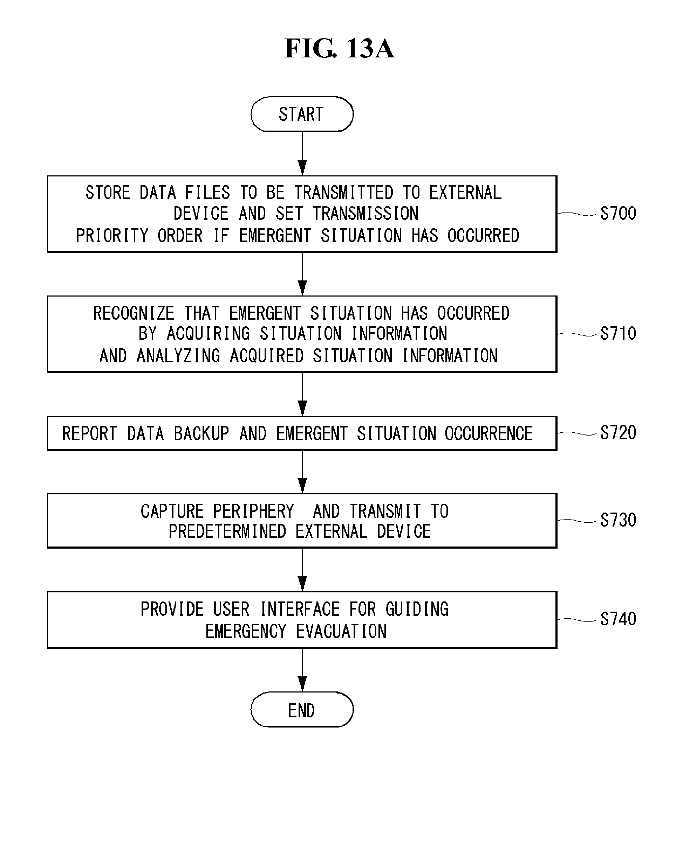

In addition, FIG. 13A is a flowchart illustrating a method for handling an emergent situation performed in the mobile terminal 100 according to an embodiment of the present invention. As shown, the controller 180 stores data files to be transmitted to the external device (that is, data files for backup to the external device) and a transmission priority order between data files to the memory 160 if an emergent situation has occurred (S700).

Then, if the situation information is acquired through at least one information acquisition mechanism, the controller 180 recognizes that the emergent situation has occurred by analyzing the acquired situation information (S710). The controller 180 then performs the data backup function and the emergent situation occurrence report, as described above (S720).

In addition, the controller 180 can capture the periphery around the terminal using the camera 121 and transmit the captured image to a predetermined external device (S730). That is, the captured image may be important material to decide the emergent situation. Further, the predetermined external device may be a server or report reception system of the relevant agency for the occurred emergent situation. However, the scope of the present invention is limited to thereof.

In addition, the controller 180 can provide a user interface for guiding emergency evacuation to the user if recognized that the emergent situation has occurred (S740). Here, the user interface may represent the emergency evacuation path on a map. Then, the user can urgently evacuate by referring to the map. Further, it may be preferable to display the current location of the user and its moving path on the user interface.

In addition, the user interface may include a voice message or vibration for guiding the emergency evacuation path to the user. For example, if a fire has occurred in a building, the controller 180 can acquire the current location of the mobile terminal 100 and output the voice message to guide the user to an emergency exit accordingly. In addition, if the user selects the wrong direction or path, the controller 180 can transmit a warning message by vibration. However, the user interface for emergency evacuation provided to the user is not limited to the examples described above.

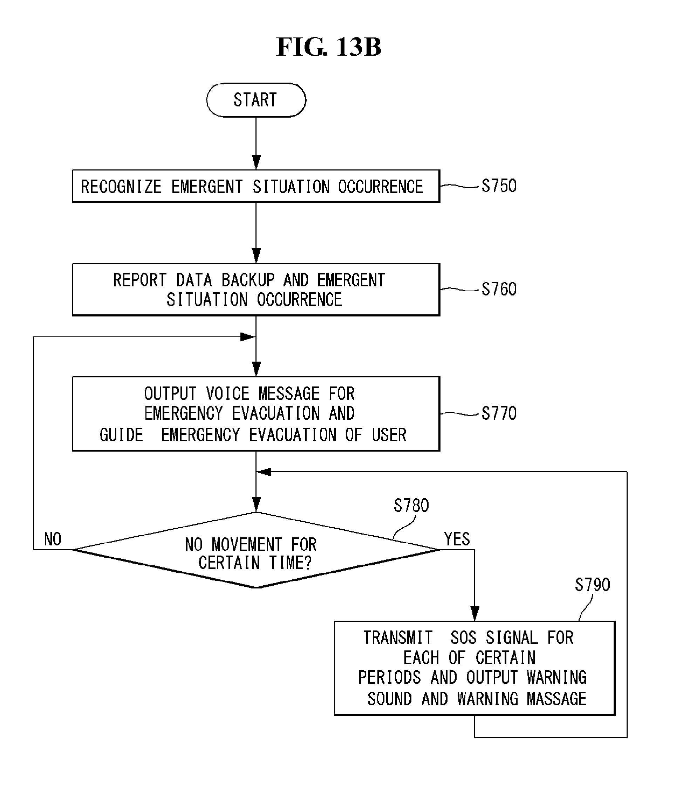

Next, FIG. 13B is a flowchart illustrating a method for handling an emergent situation in the mobile terminal 100 according to another embodiment of the present invention. As shown, the controller 180 analyzes the acquired situation information to recognize the occurrence of the emergent situation (S750).

Then, the controller 180 performs the data backup function and the emergent situation occurrence report, as described above (S760). The controller 180 then outputs the voice message for emergency evacuation through the audio output unit 152, and guides the emergency evacuation of the user (S770). At this time, the controller 180 can additionally display the user interface for guiding the emergency evacuation on a display unit 151.

Further, while performing the emergency evacuation guiding, the controller 180 can decide that there is no movement of the mobile terminal 100 for a certain time (S780). For example, the controller 180 can decide the movement of the mobile terminal 100 using data sensed by various sensors included in the sensing unit 140.

If there is no movement of the mobile terminal 100 for a certain time (Yes in S780), the controller 180 transmits a distress signal for each of certain periods (S790). That is, in this instance, there is a situation that the user cannot be evacuated, even if the emergent situation has occurred. Thus, it is desirable to repeatedly transmit the distress signal transmission until the battery power is exhausted below a preset threshold or the mobile terminal starts to move.

Meanwhile, if the movement of the mobile terminal 100 is not sensed for a certain time (No in S780), the controller 180 outputs a warning voice or warning message through the audio output unit 152. In more detail, if the user is unconscious, the user may become conscious by hearing the warning voice or warning message. However, if the movement of the mobile terminal 100 does not stop for a certain time, the controller 180 can continuously perform the emergency evacuation guiding operation.

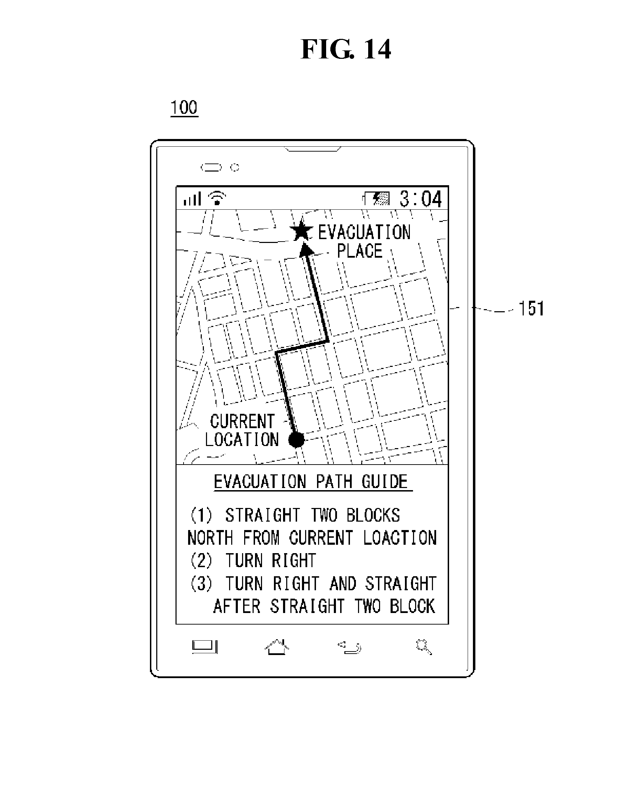

Next, FIG. 14 is a diagram illustrating a user interface provided in the mobile terminal 100 according to an embodiment of the present invention according to the method for handling the emergent situation shown in FIG. 13A. Referring to FIG. 14, the map on which the path is displayed from the current location to a place of refuge and the message for guiding the path are represented on the display unit 151 of the mobile terminal 100. Meanwhile, the user's current location, the path, the map, and the message can be updated to reflect the user's movement.

Further, when the user needs to change the direction while moving along the path, or after changing the direction, the controller 180 can output a voice message for guiding the moving distance through the audio output unit 152.

In addition, the controller 180 can generate vibration for guiding the moving path of the user through the haptic module 154. For example, if the user deviated from the guided path, the controller 180 can generate the vibration as a warning.

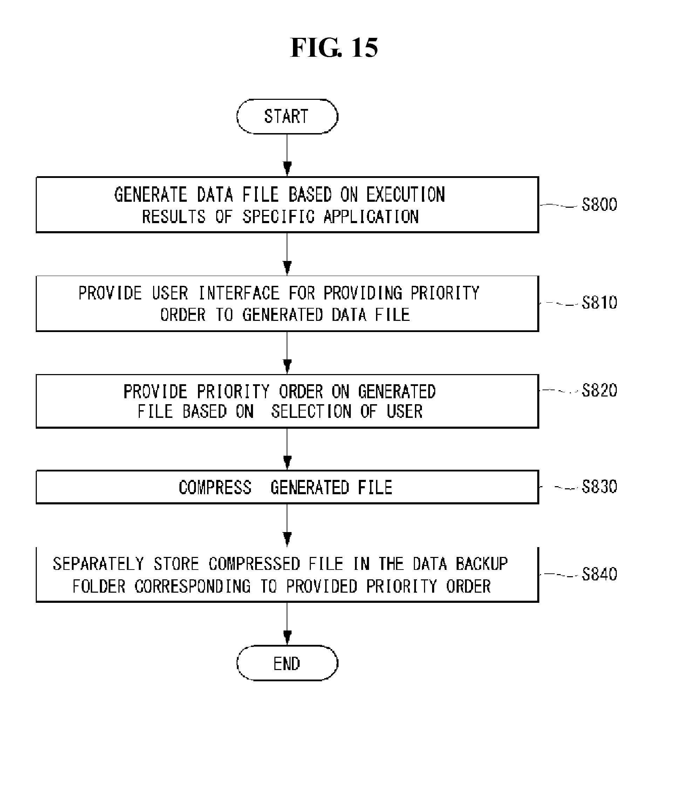

FIG. 15 is a flowchart illustrating a method for providing a data backup priority order to a specific file in the mobile terminal 100 according to an embodiment of the present invention.

As shown, the data file is generated based on execution results of the specific application (S800). If the generated file is selected, the controller 180 provides the priority order at a time the data backup is performed on the generated file on the display unit 151 (S810).

The user then selects a specific rank through the user interface. In addition, the controller 180 provides the priority order on the generated file based on the selection of the user (S820), compresses the generated file (S830), and separately stores the compressed file in the data backup folder corresponding to the provided priority order (S840).

However, according to another implementation of the present invention, the controller 180 separately stores the generated file in the data backup folder corresponding to the provided priority order, without compressing the file. In addition, the controller 180 stores the generated file in the memory area to be originally stored, but does not store the generated file in the separated folder. Also, in this instance, if the emergent situation has occurred, the controller 180 preferably performs the transmitting process to the external device for data backup after the backup data is extracted.

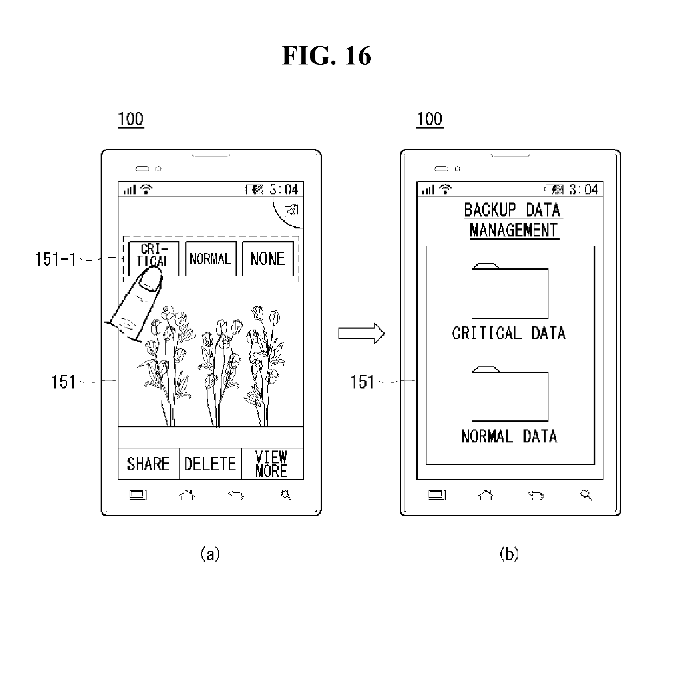

Next, FIG. 16 is a diagram illustrating providing a priority order to an image file generated from a camera application execution results according to the method for providing the priority order shown in FIG. 15.

Referring to FIG. 16(a), the controller 180 displays a user interface 151-1 on the display unit 151 for providing the priority order to the generated image file. Also, in the user interface 151-1, the critical data refers to the data to be backed up by a first priority, and the normal data refers to the data to be backed up after the critical data is backed up.

In addition, in FIG. 16, the priority order of the backup data is simply divided into two steps. However, according to another implementation of the present invention, the data backup priority order may be set to three or more steps.

As shown in FIG. 16(a), if the user selects the generated image file as the critical data file, the controller 180 can compress the generated image file and separately store the compressed file in the critical data folder. Meanwhile, the generated image data may be also stored in a memory assigned to the camera application without being compressed.

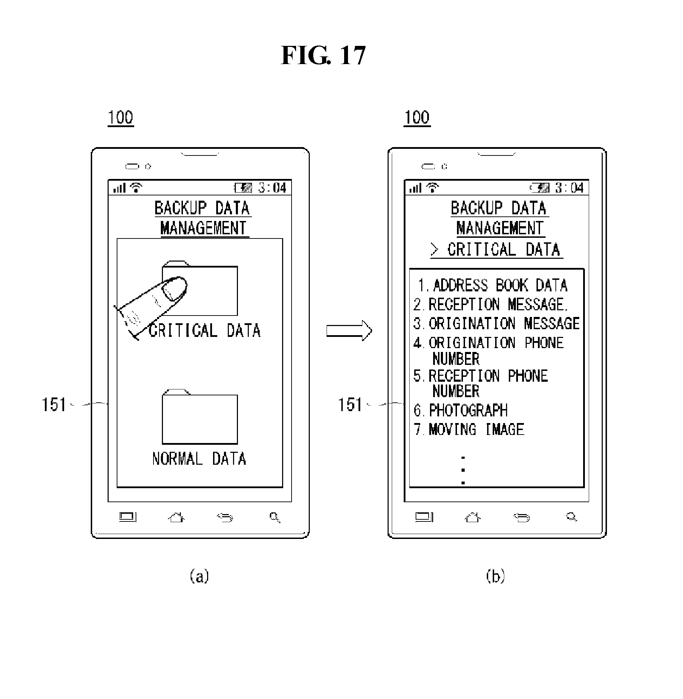

Next, FIG. 17 is a diagram illustrating backup data being stored in a data backup folder provided in the mobile terminal 100 according to an embodiment of the present invention. As shown in FIG. 17(a), the user touches the critical data of the data backup folder. Then, the controller 180 displays the critical data on the display unit 151 by opening the critical data folder.

Referring to FIG. 17(b), address book data, a reception message, an origination message and the like are stored on the critical data folder at regular intervals. Further, the number of each data may be backup priority orders between data stored at regular intervals. That is, if an emergent situation has occurred, the orders transmitted by the controller 180 to the external device may be orders of the address book data, the reception message, the origination message, and the like.

Meanwhile, the priority order may be already predetermined, and may be an order set by the user. Further, names of the data item list may be set by the user and names already stored for the data storage space included in files selected by the user, as shown in FIG. 17(b).

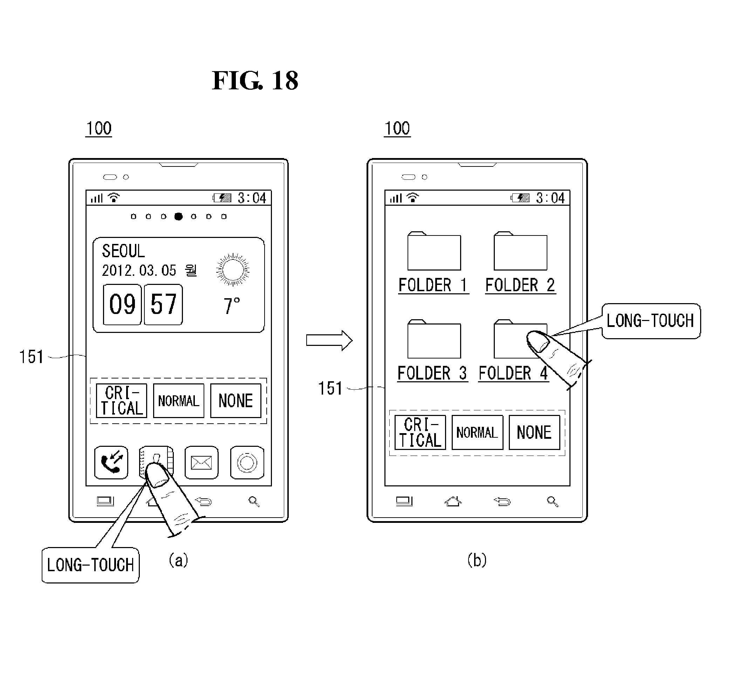

Next, FIG. 18 is a diagram illustrating methods for setting a priority order of a data backup in the mobile terminal 100 according to an embodiment of the present invention. More specifically, FIG. 18(a) illustrates the data backup priority order can be set as an application unit by the user, and FIG. 18(b) illustrates the data backup priority order can be set as a folder unit by the user.

Referring to FIG. 18(a), if the user long-touches an icon of "Address Book Application", the controller 180 displays an user interface for providing a priority order to data files related to the address book application on the display unit 151. In other words, the controller 180 can provide a specific priority order to all data files stored in a memory area assigned to the address book application according to the user's selection by the user interface.

Referring to FIG. 18(b), if the user long-touches an icon of "folder 4", the controller 180 displays the user interface for providing the priority order to all data files included in the folder 4 on the display unit 151.

Meanwhile, although the user interface is provided for selecting the data backup priority order based on the long-touch for a selected item in FIG. 18, another user's action can provide the user interface. For example, if the user performs a double-tap on the item or selects a separate hardware key or a software key together with a selection of the item, the controller 180 can provide the user interface.

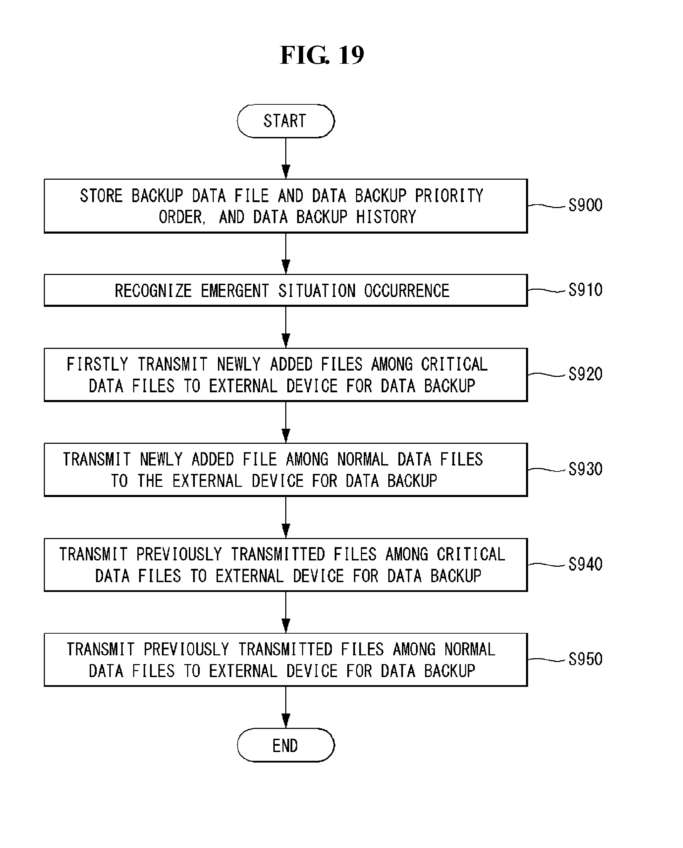

FIG. 19 is a flowchart illustrating a data backup method performed in the mobile terminal 100 according to an embodiment of the present invention. As shown, the controller 180 stores the backup data file and the data backup priority order, and a data backup history into the memory 160 (S900). Then, the controller 180 recognizes an emergent situation occurrence based on situation information acquired by at least one information acquisition mechanism (S910).

Further, the controller 180 firstly transmits newly added files among critical data files to the external device for data backup (S920), and then newly added file among normal data files to the external device for data backup (S930).

The controller 180 then transmits previously transmitted files among critical data files to the external device for data backup (S940), and then previously transmitted files among normal data files to the external device for data backup (S950). According to another implementation type of the present invention, the controller 180 does not transmit the previously transmitted files among the critical data and the normal data to the external device.

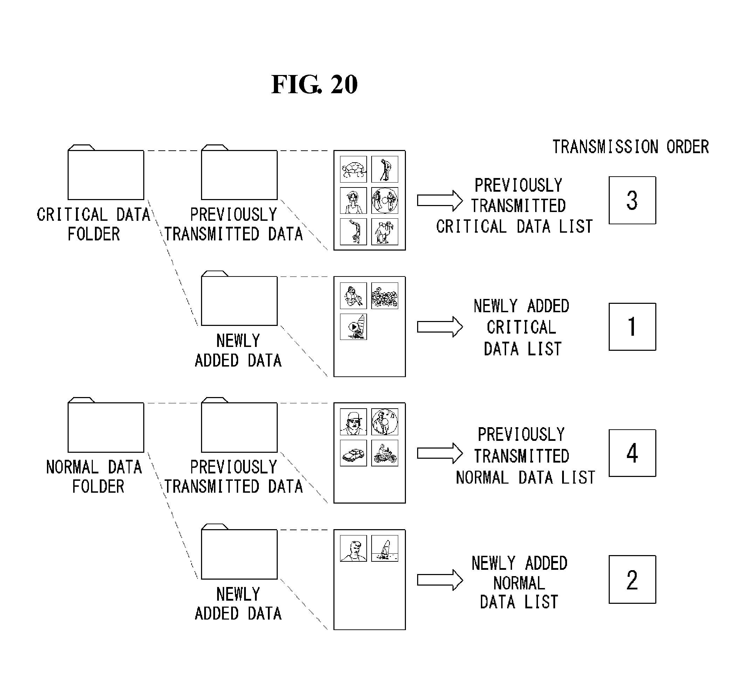

Next, FIG. 20 is a diagram illustrating backup data files being transmitted according to a data backup method shown in FIG. 19. Referring to FIG. 20, a transmission order of the critical data and normal data set as backup data in the mobile terminal 100 can be in the order of newly added critical data, newly added normal data, previously transmitted critical data, and previously transmitted normal data.

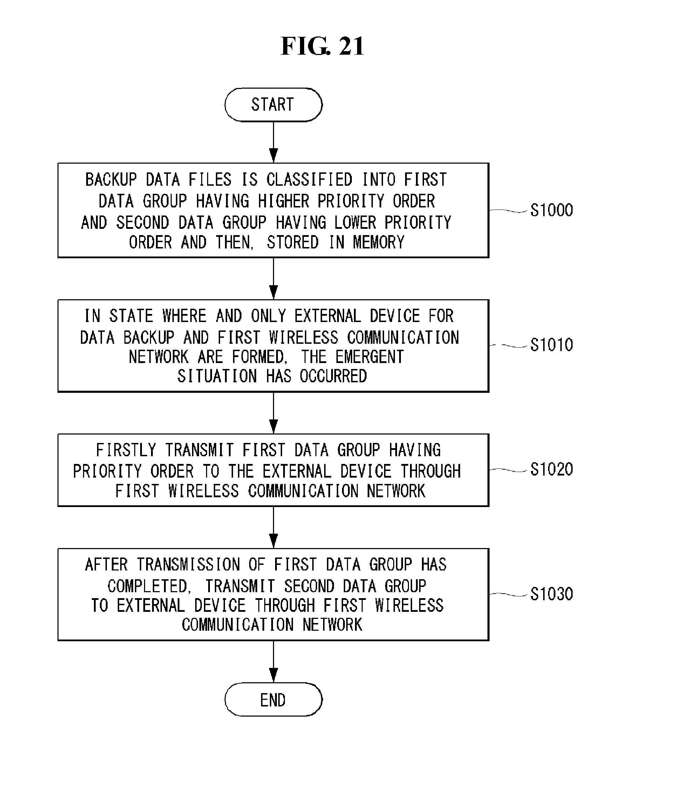

Next, FIG. 21 is a flowchart illustrating a data backup method performed in the mobile terminal 100 according to still another embodiment of the present invention. As shown, the controller 180 classifies backup data files into a first data group having a higher priority order and a second data group having a lower priority order depending on the user's setting or a predetermined criterion and stores the classified groups in the memory 160 (S1000).

In this example, the emergent situation has occurred when only the external device and the first wireless communication network are formed (S1010). Here, the occurrence of the emergent situation can be decided based on the situation information acquired by at least one information acquisition mechanism in the controller 180.

If the controller 180 decides that the emergent situation has occurred, the controller 180 firstly transmits the first data group having a priority order to the external device through the first wireless communication network (S1020). After the transmission of the first data group has completed, the controller 180 transmits the second data group to the external device through the first wireless communication network (S1030).

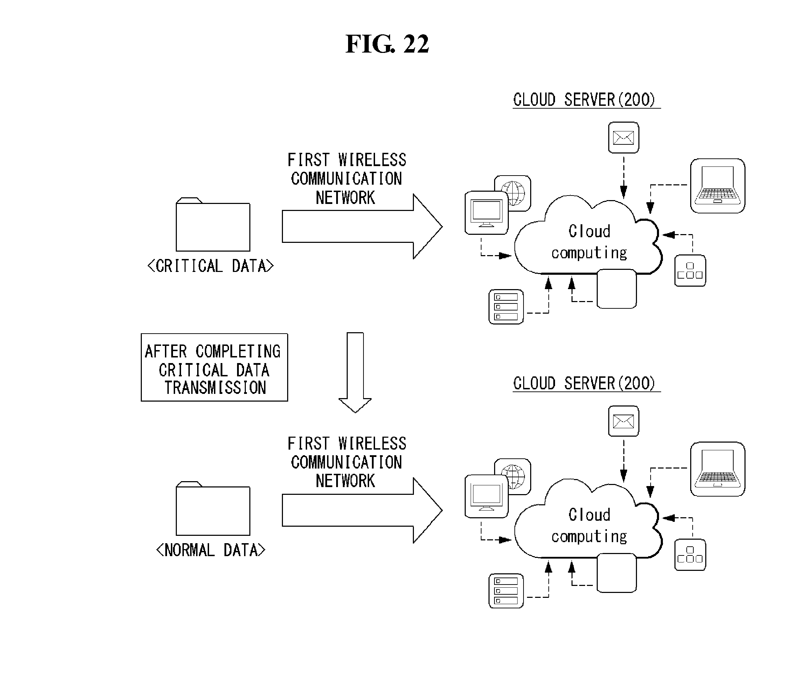

FIG. 22 is a diagram illustrating performing data backup on an external device according to a data backup method shown in FIG. 21. For reference, in FIG. 22, the critical data folder is a folder in which files having the higher priority order of the backup data files are stored, and the normal data folder is a folder in which files having the lower priority order of the backup data files are stored.

Referring to FIG. 22, the mobile terminal 100 according to an embodiment of the present invention firstly transmits the critical data having the higher priority order to the cloud server 200 through the first wireless communication network and secondly transmits the normal data having the lower priority order to the cloud server 200 through the first wireless communication network.

Meanwhile, a transmission priority order between data files included in the same folder may be decided according to the file capacity. For example, the mobile terminal 100 can transmit the critical data in order of the smaller file capacity for the data files included in the same folder.

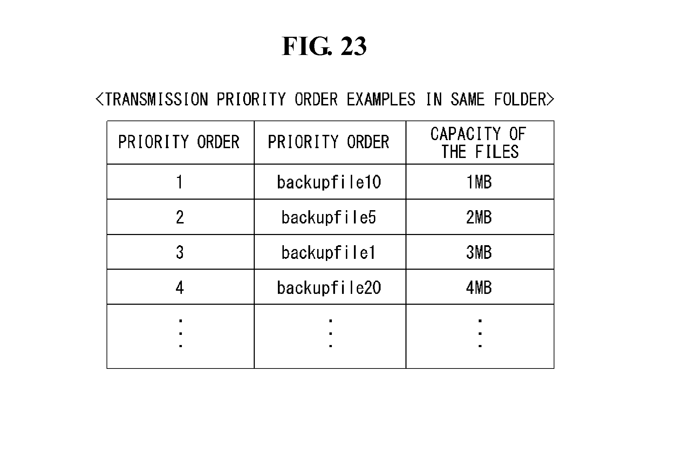

Next, FIG. 23 is a diagram illustrating a transmission priority order between data files included in the same backup data folder being set based on the capacity of the files in the mobile terminal 100 according to an embodiment of the present invention. Referring to FIG. 23, the smaller the capacity, the faster the transmission priority order between the data files stored in the same folder.

In contrast with FIG. 22, when the mobile terminal 100 is connected through the second wireless communication network together with the external device for data backup and the first wireless communication network, if the emergent situation has occurred, the mobile terminal 100 firstly transmits the first data group having the faster priority order to the external device through both of the first and second wireless communication networks. In addition, if the transmission of the first data group has completed, the second data group having the lower priority order can be transmitted to the external device through both of the first and second wireless communication network.

For example, when the mobile terminal 100 is connected to the cloud server 200 through a mobile communication network and an Wi-Fi network, and if the emergent situation has occurred, the mobile terminal 100 transmits the first data group to the cloud server 200 through the mobile communication network and the Wi-Fi network, and then the second data group can be transmitted to the cloud server 200 through the mobile communication network and the Wi-Fi network.

Meanwhile, the mobile terminal 100 can be configured such that a plurality of data files included in the same data group is distributed to the first wireless communication network and the second wireless communication network and then transmitted to the external device. For example, the controller 180 can transmit one of the first and the second data files having the larger capacity included in the same data group to the external device through one of the first and second wireless communication networks having the faster communication speed, and can transmit the other one of the first and the second data files having the smaller capacity to the external device through the other one of the first and second wireless communication networks.

For example, if the emergent situation has occurred in which the first data file having the capacity of 1MB and the second data file having the capacity of 100MB are stored and the mobile terminal 100 is connected to the communication network and the Wi-Fi network, the mobile terminal 100 can transmit the second data file having the larger capacity to the external device for backup through the Wi-Fi network having the faster communication speed and transmit the first data file having the smaller capacity to the external device for data backup through the Wi-Fi network having the slower communication speed.

In addition, the mobile terminal 100 can be configured such that a plurality of data files included in the same data group is distributed the first wireless communication network and the second wireless communication network and then transmitted to the external device by considering the capacity of data file, and the first and second wireless communication networks.

For example, assuming a first data file having the capacity of 2MB, a second data file having the capacity of 5MB, and a third file having the capacity of 10MB are stored in the same data group. If the mobile terminal 100 is connected to the mobile communication network having the communication speed of 1MB/sec and the Wi-Fi network having the communication speed of 10MB/sec, the mobile terminal 100 can transmit the second and third data files through the Wi-Fi network, and transmit the first data file through the mobile communication network and accordingly, the plurality of data files included in the same data group can be transmitted to the external device in only two seconds.

If the mobile terminal 100 is connected to the first mobile communication network having the communication speed of 1MB/sec and the second mobile communication network having the communication speed of 2MB/sec, the mobile terminal 100 can transmit the second data file through the first mobile communication network, transmit the first and third data file through the second mobile communication network and accordingly, a plurality of data files included in the same data group can be transmitted to the external device in only six seconds.

As such, the mobile terminal 100 according to an embodiment of the present invention may be configured such the backup data files can be distributed and transmitted through the activated wireless communication network by considering the capacity of the backup data files, and communication capacity of activated wireless communication networks in order to minimize the transmission time of the backup data.

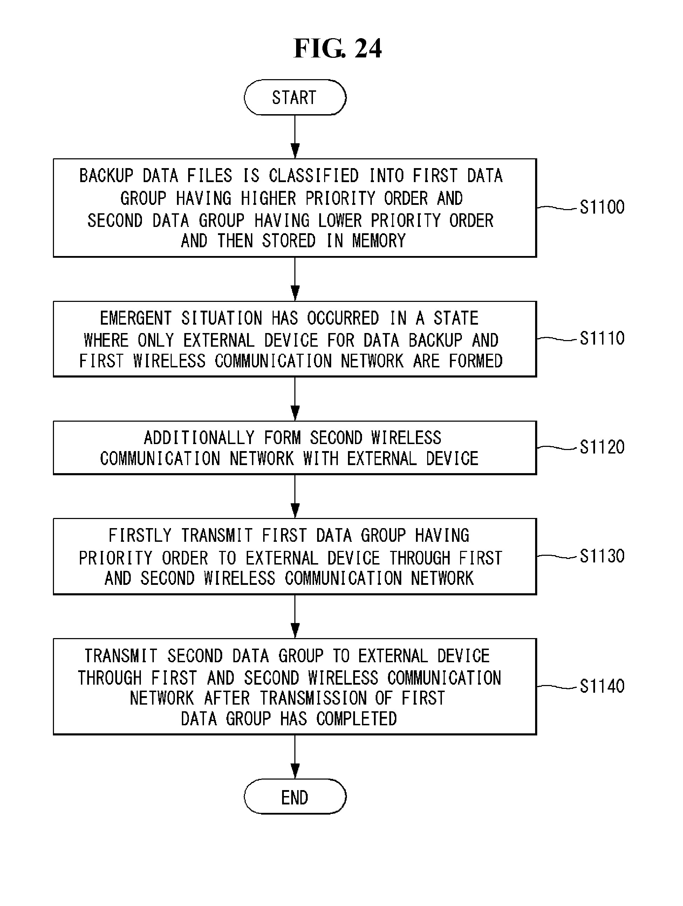

Next, FIG. 24 is a flowchart illustrating a data backup method performed in the mobile terminal 100 according to yet another embodiment of the present invention. As shown, the controller 180 classifies the backup data files into the first data group having the higher priority order and the second data group having the lower priority order, and then stores the files in the memory 160 according to the user's setting or a predetermined criterion (S1100).

In addition, the emergent situation has occurred when the backup data files are stored in the memory 160 and only the external device for data backup and the first wireless communication network are formed (S1110). Then, the controller 180 additionally forms the second wireless communication network with the external device (S1120).

Further, the controller 180 firstly transmits the first data group having the priority order to the external device through both of the first and second wireless communication networks (S1130). After the transmission of the first data group has completed, the controller 180 transmits the second data group to the external device through both of the first and second wireless communication networks (S1030).

According to the data backup method shown in FIG. 24, the mobile terminal 100 can quickly transmit more backup data to the external device by increasing the communication speed with the external device for data backup if the emergent situation has occurred.

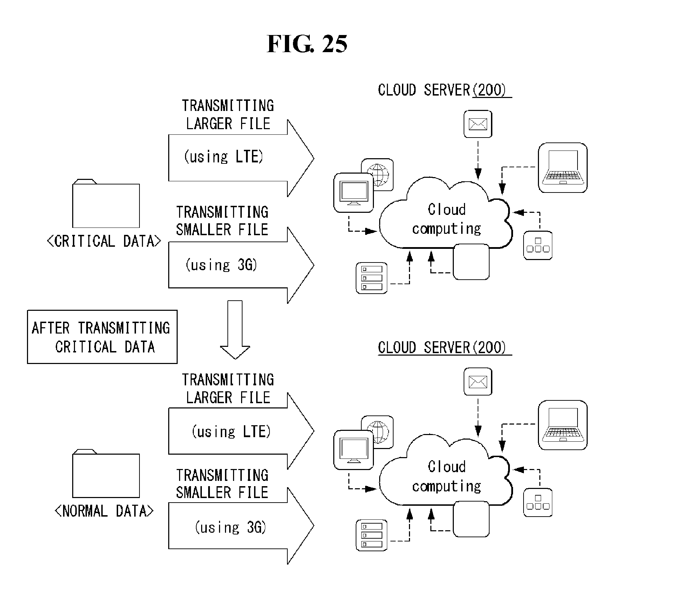

In addition, FIG. 25 is a diagram illustrating data files transmitted to an external device for backup according to a data backup method shown in FIG. 24. For reference, FIG. 25 illustrates that the emergent situation has occurred when the first mobile communication network (3G) is activated and the second mobile communication network (LTE) is additionally activated, and then the backup data files are transmitted.

Referring to FIG. 25, the mobile terminal 100 firstly transmits data files stored in a "critical data" folder having the higher priority order of the backup data files to the cloud server 200 through the first mobile communication network and the second mobile communication network, and then transmits data files stored in a "normal data" folder having the lower priority order of the backup data files to the cloud server 200 through the first mobile communication network and the second mobile communication network.

In addition, the mobile terminal 100 can transmit data files having the larger capacity of the data files stored in the same folder through the second mobile communication network having the faster transmission speed and can transmit data files having the smaller capacity through the first mobile communication network having the slower transmission speed. Further, a criterion classifying the data files into the larger capacity and the smaller capacity may be already determined or changed by the user.

Also, in the data backup method of the shown in FIG. 24, the controller 180 can also transmit data files included in the same data group to the external device for data backup in an order of the lower capacity, as described above. In addition, the controller 180 can determine a wireless communication network that transmits the plurality of data files included in the same data group by considering the capacity of data file, a communication speed of the first wireless communication network, and a communication speed of the second wireless communication network.

Further, the controller 180 can transmit one of the first and the second data files having the larger capacity included in the same data group to the external device through one of the first and second wireless communication networks having the faster communication speed, and can transmit the other one of the first and the second data files to the external device through the other one of the first and second wireless communication networks.

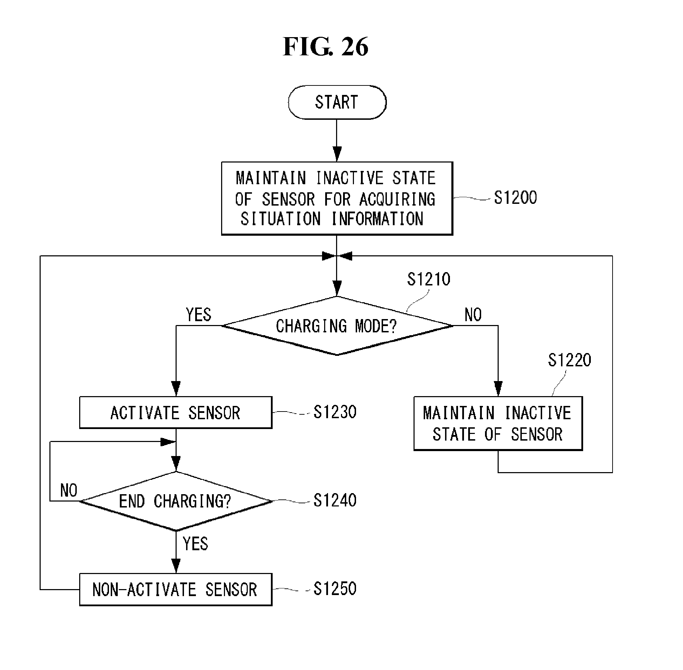

Next, FIG. 26 is a flowchart illustrating a method for controlling an activation state of a sensor for acquiring situation information to decide an emergent situation in the mobile terminal 100 according to an embodiment of the present invention.

As shown, the controller 180 maintains an inactive state of the sensor for acquiring the situation information (S1200). This is performed to minimize the battery consumption of the mobile terminal, if possible. The controller 180 then decides whether the mobile terminal 100 is in a charge mode (S1210). If the mobile terminal 100 is in a non-charging mode (No in S1210), the controller 180 maintains the inactive state of the sensor (S1220).

However, if the mobile terminal 100 is in a charging mode (Yes in S1210), the controller 180 activates the sensor (S1230) so the controller 180 can decide whether the emergent situation has occurred based on the situation information acquired through the sensor. That is, if the mobile terminal 100 is in the charging mode, an emergency occurrence is more important than the battery consumption, when the battery of the mobile terminal 100 is being charged.

In addition, when the sensor is activated, the controller 180 decides whether the charging of the mobile terminal 100 has completed (S1240). If the charging of the mobile terminal 100 has completed (Yes in S1240), the controller 180 again performs the step S1210.

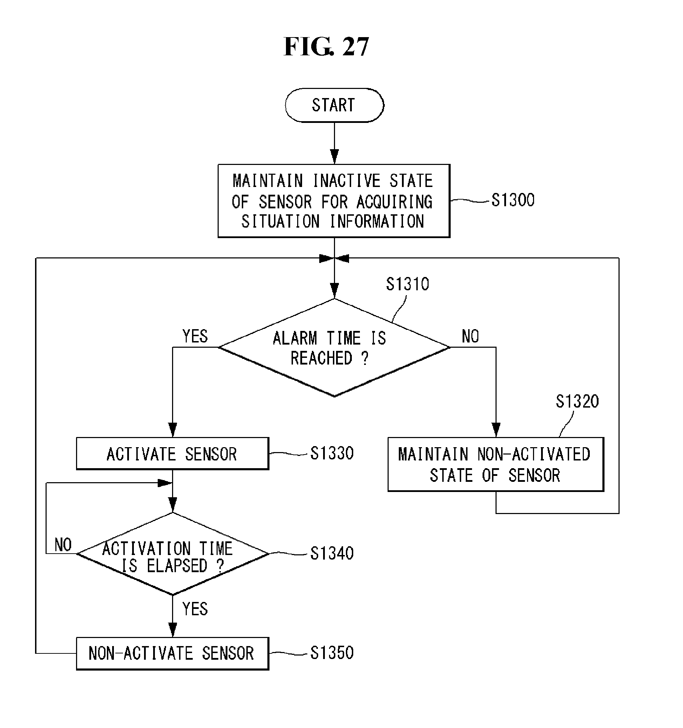

FIG. 27 is a flowchart illustrating a method for controlling an activation state of a sensor for acquiring situation information to decide an emergent situation in the mobile terminal 100 according to another embodiment of the present invention.

As shown, the controller 180 maintains an inactive state of the sensor for acquiring the situation information (S1300) to minimize the battery consumption of the mobile terminal, if possible.

As described earlier, the sensor may be a temperature sensor, a humidity sensor, a vibration sensor, an impulse sensing sensor and the like. Other types of sensors may also be used.

The controller 180 decides whether an alarm time for activation of the sensor has elapsed (S1310). If the alarm time has not arrived (No in S1310), the controller 180 maintains a non-activated state of the sensor (S1320).

However, if the alarm time has arrived (Yes in S1320), the controller 180 activates the sensor (S1330), and the controller 180 can decide whether the emergent situation has occurred based on the situation information acquired through the sensor. Thus, the battery consumption of the mobile terminal can be minimized in order to decide the emergent situation by activating the sensor when the alarm time set by the user has only arrived.

When the sensor has activated, the controller 180 decides whether a preset sensor activation time of the sensor has elapsed (S1340). If the preset sensor activation time of the mobile terminal 100 has elapsed (Yes in S1340), the controller 180 deactivates the sensor (S1350).

Referring to FIGS. 26 and 27, the method for reducing the battery consumption was described by temporarily activating the sensor for acquiring the situation information. However, the mobile terminal 100 may reduce the battery consumption by a different way. For example, the mobile terminal 100 can reduce the battery consumption by activating the sensor only when the user sends emergency calls such as 911 or 311 or the user does not receive more than a certain number of an incoming call.

Meanwhile, for reducing the battery consumption, the activation control method of a sensor shown in FIG. 27 can be similarly applied to an active control method of the information acquisition mechanism for acquiring the situation information based on the decision of the emergent situation occurrence.

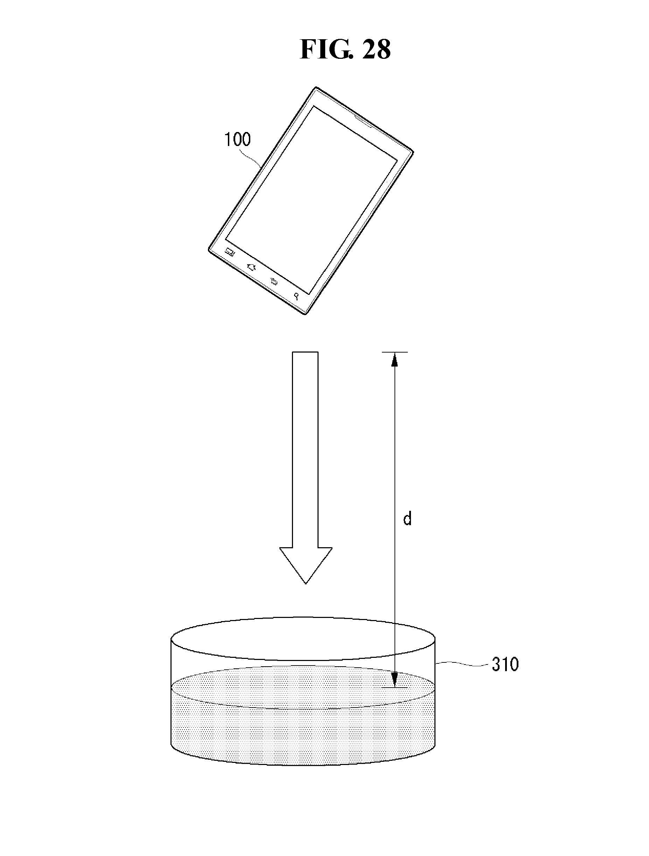

Next, FIG. 28 is a diagram illustrating a mobile terminal being accidently dropped into water. For example, while the user uses the mobile terminal 100, the mobile terminal 100 may slip from the user's hands and fall into water after a certain distance (d).

As an example, the user may fall into a swimming pool, toilet, lake or ocean. In addition, the atmosphere around the mobile terminal 100 and the speed of the mobile terminal 100 changes during the fall and the humidity inside and/or around the mobile terminal 100 that fell into the water also changes.

These changes can be sensed by the above-mentioned sensing unit 140. Thus, one embodiment of the present invention uses the above-mentioned sensing unit 140 when decided whether the phone has dropped into water.

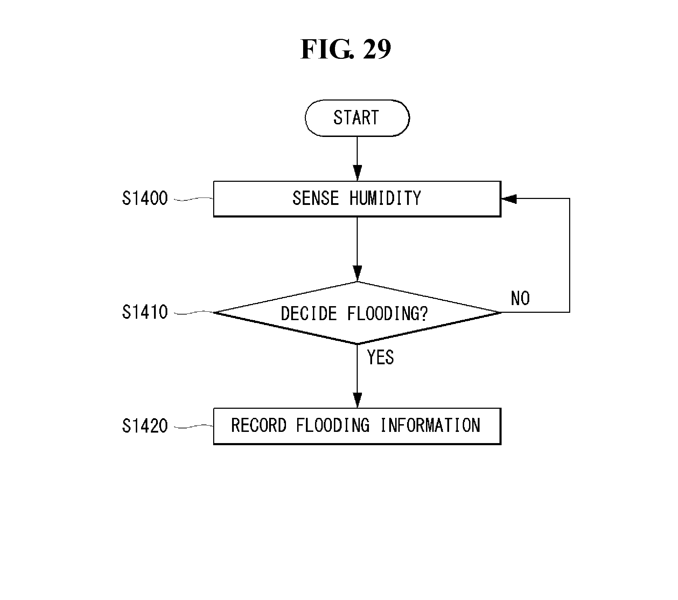

For example, FIG. 29 is a flowchart illustrating a mobile terminal control method for recording flooding information of the mobile terminal 100 according to an embodiment of the present invention. As shown, the humidity sensor 142 of the mobile terminal 100 can sense the humidity around the mobile terminal 100 (S1400).

As an example, if an ambient humidity of the mobile terminal 100 is 40%, the humidity sensor 142 can sense the humidity and output an electrical signal indicating the ambient humidity value of 40% to the controller 180.

Thus, the controller 180 can decide a change in the ambient humidity value of the mobile terminal 100 through the humidity sensing of the humidity sensor 142. In addition, if the change in the humidity value of the mobile terminal 100 is sensed by the humidity sensor 142, the controller 180 decides whether the phone has fallen into water (S1410). For example, if the ambient humidity value of the mobile terminal 100 sensed by the humidity sensor 142 changed from 40% to 90%, the controller 180 can decided that the mobile terminal 100 has fallen into water and become flooded.

In addition, even if the humidity value sensed by the humidity sensor 142 has arrived to a specific value, the controller 180 can decide whether the mobile terminal 100 has been flooded. For example, if the ambient humidity value of the mobile terminal 100 sensed by the sensor 142 has reached 100%, the controller 180 can decide that the mobile terminal 100 has fallen into water.

At this time, if the controller 180 determines the mobile terminal 100 has fallen into water, the controller 180 records flooding information into a memory (S1420). At this time, the flooding information may be a humidity value sensed by the humidity sensor 142.

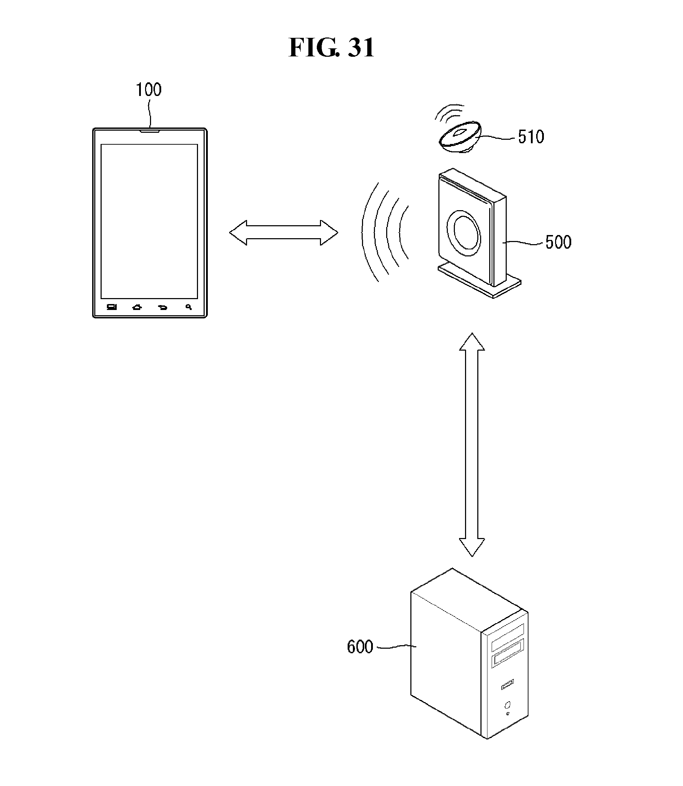

In addition, the memory 160 may be a NFC memory 116 in the NFC module 115. Because the NFC module 115 communicates through a magnetic field induction, the NFC memory 116 can perform the wireless communication through the magnetic field induction even if the power supply is stopped. In this instance, if the controller 180 determines the mobile terminal 100 has been flooded, and even if the mobile terminal 100 cannot be operated, the mobile terminal 100 can provide the flooding information to the outside. This will be described in detail with reference to FIG. 31.

In other words, in the method for controlling the mobile terminal 100 according to one embodiment of the present invention, the change in the humidity value can be sensed and thus the controller 180 can decide whether the mobile terminal 100 has been flooded. In addition, when the controller 180 decides that the mobile terminal 100 has been flooded, the change in the humidity value can be recorded into the memory.

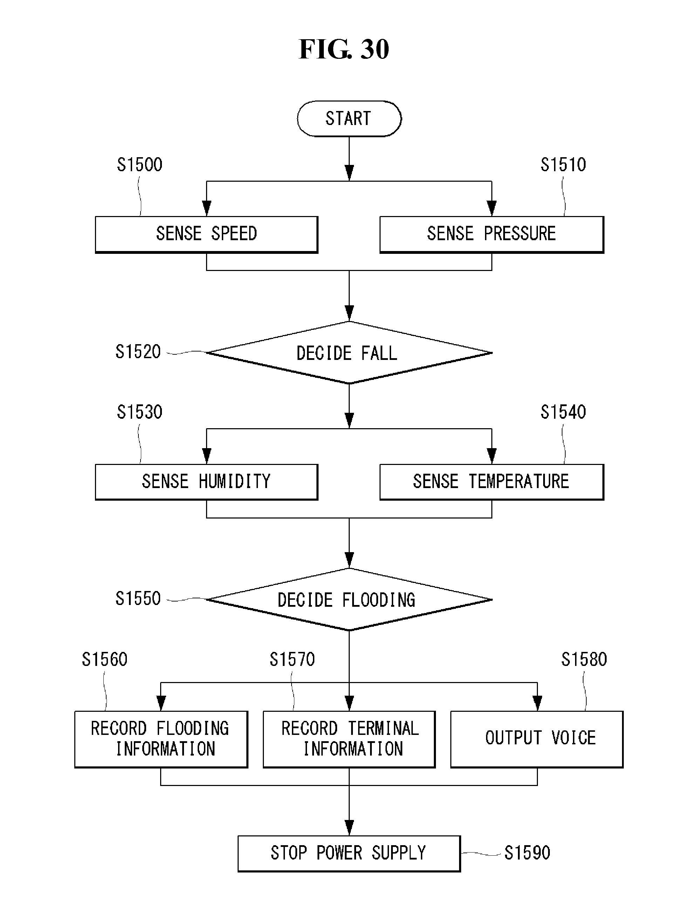

Meanwhile, according to another embodiment of the present invention, another sensor different from the sensing unit 140 can be used together with the flooding decision of the mobile terminal 100. This feature is described in more detail below with reference to FIG. 30.

In particular, FIG. 30 is a flowchart illustrating a mobile terminal control method according to another embodiment of the present invention. As shown in FIG. 30, the acceleration sensor 144 of the mobile terminal 100 senses the acceleration of the mobile terminal 100 while the mobile terminal 100 is falling (S1500). In more detail, the acceleration sensor 144 can sense the acceleration of the mobile terminal 100 in the direction of gravity.

In addition, the atmosphere sensor 145 of the mobile terminal 100 senses an ambient atmosphere of the mobile terminal 100 while the mobile terminal 100 is falling(S1510). As an example, during the fall of the mobile terminal 100, the ambient atmosphere value after the fall of the mobile terminal 100 is greater than that before the fall of the mobile terminal 100, the ambient atmosphere value can be sensed by the atmosphere sensor 145, and thus the change of the ambient atmosphere value can be output to the controller 180 as an electrical signal.

Next, the controller 180 can decide whether the mobile terminal 100 is falling in response to the change in the acceleration value or the atmosphere value each output from the acceleration sensor 144 or the atmosphere sensor 145 (S1520).

As an example, if the change in the acceleration value output from the acceleration sensor 144 in the direction of gravity is greater than a predetermined value, the controller 180 can decide that the mobile terminal 100 is falling. As another example, if the change value of the atmosphere value output from the atmosphere sensor 145 is greater than a predetermined value, the controller 180 can decide that the mobile terminal 100 is falling.

Further, the controller 180 can decide whether the mobile terminal 100 is falling using both of the change values of the acceleration value and the atmosphere value. Next, when the controller 180 decides whether the mobile terminal 100 is falling, the humidity sensor 142 of the mobile terminal 100 senses an ambient humidity of the mobile terminal 100 (S1530).

In addition, the temperature sensor 143 of the mobile terminal 100 senses a change in the temperature of the mobile terminal 100 (S1540). As an example, when the mobile terminal 100 has been flooded, an ambient temperature value of the mobile terminal 100 is changed, and thus the temperature sensor 143 senses the change, and the change in temperature value of the mobile terminal 100 can be output to the controller 180 as an electrical signal.

Next, the controller 180 decides whether the mobile terminal 100 has been flooded based on the change value of the humidity or the change value of temperature each output from the humidity sensor 142 or the temperature sensor 143 (S1550).

As an example, if the change value of the humidity output from the humidity sensor 142 is greater than a predetermined value, the controller 180 can decide that the mobile terminal 100 has flooded (fall into water). As another example, if the change value of temperature output from the temperature sensor 143 is greater than a predetermined value, the controller 180 can decide that the mobile terminal 100 has flooded.

The controller 180 may also decide whether the mobile terminal 100 has been flooded using both of the change values of the humidity and the temperature. Next, when the controller 180 decides the mobile terminal 100 has been flooded, the controller 180 records the flooding information into the NFC memory 116 (S1560). At this time, the flooding information may include any one of information about an acceleration value, an atmosphere change value, a humidity change value or the temperature change value.

In addition, if the controller 180 decides that the mobile terminal 100 has been flooded, the controller 180 records at least portion of information already stored in the mobile terminal 100 into the NFC memory 116 as flooding information (S1570). At this time, the information already stored in the mobile terminal 100 may be a phone book, a schedule, a call record or personal information of the mobile terminal 100 user.

As an example, the controller 180 has an effect in that the information already stored in the mobile terminal 100 can stored in the NFC memory 116 and the critical information can be restored in the future by the user before removing the power supply.

In addition, if the mobile terminal 100 has been flooded, the controller 180 outputs a voice indicating that the mobile terminal 100 has been flooded, through the audio output unit 152 (S1580). As an example, the audio output unit 152 can report the flooding to the user such the user does not apply the power of the mobile terminal 100.

Next, if the mobile terminal 100 has been flooded, the controller 180 controls the power supply that supplies power to the mobile terminal 100 to stop the power of the mobile terminal 100 (S1590). This is because the components of the mobile terminal 100 may be in contact with water when the power is applied causing damage of the components may be caused.

According to another embodiment of the present invention described above, the method for controlling the mobile terminal has an effect in that when the mobile terminal 100 has been flooded, the flooding information can be recorded and thus, accurate flooding information can be provided to the user based on changes of a speed, an atmosphere, a humidity or a temperature.

In addition, according to another embodiment of the present invention, the method for controlling the mobile terminal has an effect in that the critical information already stored in the mobile terminal 100 can be recorded in the NFC memory 116 and thus, the critical information can be easily restored in the future.

In addition, according to another embodiment of the present invention, the method for controlling the mobile terminal has an effect in that a voice indicating the flooding of the mobile terminal 100 can be output and damage of the mobile terminal 100 can be prevented by stopping the power of the mobile terminal 100.

Next, referring to FIG. 31, a method for transmitting and receiving flooding information of the mobile terminal 100 will be described. In particular, FIG. 31 is a diagram illustrating a method in which flooding information of the mobile terminal 100 is transmitted to the outside. In FIG. 31, it is assumed that the flooding information is stored in the NFC memory 116 of the NFC module 115.

As shown, the mobile terminal 100 can transmit and receive the flooding information to the external device 500 that can perform the near field communication. At this time, the NFC module 115 for the near field communication is the same as those described with reference to FIG. 1.

As an example, the mobile terminal 100 can initiate a transmission of flooding information with the external device 500 using an NFC interface through an NFC handshake operation. In addition, the mobile terminal 100 can also transmit and receive the flooding information to and from the external device 500 using a device identification networking protocol by setting the communication link.

At this time, when the external device 500 further includes a voice output unit 510, the external device 500 can receive the flooding information from the NFC module 115 by generating a magnetic field induction and the voice output unit 510 can report that the mobile terminal 100 has been flooded, by voice.

In addition, the external device 500 may receive information recorded in the NFC memory 116 among critical information already stored in the mobile terminal 100 other than the flooding information.

Further, the external device 500 can transmit flooding information of the mobile terminal 100 to an external server 600 and the external server 600 can store the flooding information of the mobile terminal 100. In this way, the external server 600 can manage the flooding information of the mobile terminal 100 by storing the information in a database

Therefore, according to one embodiment of the present invention, the mobile terminal 100 has an effect in that information on whether the mobile terminal 100 has been flooded can be easily provided through the external device 600.

According to an embodiment of the present invention, the mobile terminal can transmit predetermined data stored in the memory to an external device according to a predetermined priority order if an emergent situation has occurred. Further, the mobile terminal can transmit location information, user information, and information related to an emergent situation to a predetermined report agency by occurred emergent situations, if the emergent situation has occurred.

In addition, the user can grasp whether the mobile terminal is being flooded and correct a flooding situation when the mobile terminal is flooded. Further, the loss of important information stored in a mobile terminal can be prevented.

Thus, the present invention solves the problems with using a flooding label on an inside of the mobile terminal to indicate whether the mobile terminal has been flooded. That is, in the present invention, the user does not have to disassemble the mobile terminal to visually inspect the flooding label. Further, using a flooding label has problems because the color of the flooding label may be changed due to humidity.

Each of the methods in the mobile terminal 100 according to an embodiment of the present invention can be implemented in the form of programs that can be performed by a variety of computers and recorded into a computer readable recording medium. The computer readable recording medium may include a program instruction, a data file, and a data structure or the combination thereof. The programs to be recorded on the medium may be configured to be specially designed for the present invention and may be a known computer software to those skilled in the art.

Examples of the computer readable recording medium may include a magnetic media such as hard disks, floppy disks, and magnetic tapes, an optical media such as CD-ROMs and DVDs, a magneto-optical media such as floppy disks, and a hardware devices specially configured to store and perform program instructions such as a read-only memory (ROM), a random-access memory (RAM), a flash memory and the like. Examples of the programs may include high-level language codes performed by a computer using an interpreter or the like as well as machine codes produced by a compiler. The above-mentioned hardware device may be configured to be operated as one or more software module to perform operations of the present invention, and vice versa.

## Claims

1. A mobile terminal comprising:
a memory (160);
a wireless communication unit (110) configured to perform wireless communication with an external device;
at least one information acquisition mechanism configured to acquire (S110) emergent situation information for deciding whether (S120) an emergent situation has occurred; and
a controller (180) configured to transmit (S140) predetermined data files stored in the memory to the external device through the wireless communication unit according to a predetermined priority order if the emergent situation has occurred.

2. The mobile terminal according to claim 1, wherein the controller is further configured to transmit location information (S130) of the mobile terminal, user information of the mobile terminal, and information related to the emergent situation to a predetermined report agency through the wireless communication unit if the emergent situation has occurred.

3. The mobile terminal according to claim 1, wherein the controller is further configured to decide that the emergent situation has occurred if the acquired emergent situation information indicates a temperature (S220) around the mobile terminal is higher than a predetermined critical temperature.

4. The mobile terminal according to claim 1, wherein the acquired emergent situation information comprises information in a group comprising:
- sound information corresponding to a sound signal occurring around the mobile terminal, the controller being further configured to analyze the acquired sound signal and decide whether the emergent situation has occurred based on an analyzed result of the sound signal ;
- disaster alerting data and location data (S410) of the mobile terminal, the controller being further configured to analyze (S420) the disaster alerting data and the location data and decide that the emergent situation has occurred if the mobile terminal is located within a certain range of a location of the emergent situation included in the disaster alerting data.
- vibration or impulse information (S510), the controller being further configured to decide that the emergent situation has occurred (S530) if the vibration or impulse information is higher than a certain level.

5. The mobile terminal according to claim 1, wherein, the acquired emergent situation information comprising vibration or impulse information and the controller being further configured to decide that the emergent situation has occurred if the vibration or impulse information is higher than a certain level, the controller is further configured to decide that the emergent situation has occurred if a predetermined component does not operate normally and the vibration or impulse information is higher than the certain level.

6. The mobile terminal according to claim 1, wherein the controller is further configured to assign (S100) a priority order for data files assigned to a specific application stored in a memory area of the memory, or for data included in a specific folder.

7. The mobile terminal according to claim 1, wherein the memory is configured to classify a plurality of backup data files into a first data group having a higher priority order and a second data group having a lower priority order and store the classified groups, and
wherein the controller is further configured to firstly transmit data files in the first data group to the external device through a first wireless communication network among first and second wireless communication networks according to a capacity of the data files if the emergent situation has occurred and the mobile terminal is only connected to the external device via the first wireless communication network.

8. A mobile terminal comprising:
a humidity sensing unit (142) configured to sense humidity;
a memory (160); and
a controller (180) configured to record flooding (S1420) information in the memory indicating the mobile terminal has been flooded (S1400) with water when the sensed humidity reaches a predetermined humidity.

9. The mobile terminal according to claim 8, further comprising:
an acceleration sensing unit (S1500) configured to sense an acceleration in the direction of gravity,
wherein the controller is further configured to record the flooding information in the memory when the sensed acceleration value (S1530) is higher than a predetermined value and the sensed humidity reaches the predetermined value.

10. The mobile terminal according to claim 8, further comprising:
an atmosphere sensing unit (145) configured to sense an atmosphere,
wherein the controller is further configured to record the flooding information in the memory when an amount of change of the sensed atmosphere is higher than a predetermined value and the sensed humidity reaches the predetermined value.

11. The mobile terminal according to claim 8, further comprising:
a temperature sensing unit (143) configured to sense a temperature,
wherein the controller is further configured to record the flooding information in the memory when an amount of change of the sensed temperature (S1540) is higher than a predetermined value and the sensed humidity reaches the predetermined value.

12. The mobile terminal according to claim 8, further comprising:
a Near Field Communication module (114),
wherein the controller is further configured to transmit the flooding information recorded in the memory to an external device through the Near Field Communication module.

13. The mobile terminal according to claim 12, wherein the memory further includes a Near Field Communication (114) memory, and
wherein the controller is further configured to record at least portion of information already stored in the mobile terminal into the Near Field Communication memory.

14. The mobile terminal according to claim 8, further comprising:
a power supply configured to supply power to the mobile terminal,
wherein the controller is further configured to stop the power supply of the mobile terminal when the mobile terminal has been flooded with water.

15. The mobile terminal according to claim 8, further comprising:
an audio output unit (152),
wherein the controller is configured to report the mobile terminal has been flooded through the audio output unit.
